# EUROPEAN PATENT APPLICATION

(11) **EP 4 761 326 A1**
(43) Date of publication of application: **17.06.2026**
(21) Application number: 24858290.0
(22) Date of filing: 12.08.2024
(51) Int. Cl.: H04W 24/02

(54) **COMMUNICATION METHOD AND APPARATUS**

(30) Priority: 31.08.2023 CN 202311133859
(71) Applicant: HUAWEI TECHNOLOGIES CO., LTD., Shenzhen, Guangdong 518129 (CN)
(72) Inventor: FANG, Songlei, Shenzhen, Guangdong 518129 (CN); LI, Chenwan, Shenzhen, Guangdong 518129 (CN); WANG, Rui, Shenzhen, Guangdong 518129 (CN); KUANG, Yiru, Shenzhen, Guangdong 518129 (CN)
(74) Representative: Thun, Clemens
(86) International application number: PCT/CN2024/111565
(87) International publication number: WO 2025/044747

(57) **Abstract**

This application provides a communication method and apparatus, and relates to the field of wireless communication technologies. In this application, occurrence of a terminal apparatus staying on a first link for a long time can be reduced, enabling the terminal apparatus to receive scheduling information of a network apparatus in a timely manner, and helping reduce a service delay. The method includes: A terminal apparatus monitors a low-power wake-up signal LP-WUS from a network apparatus on a first link. The terminal apparatus monitors a physical downlink control channel PDCCH from the network apparatus on a second link under a first condition. The first condition includes at least one of the following: a first moment arrives, where the first moment is one of periodic moments; or no LP-WUS is detected on the first link within first duration. Power consumption of the first link is less than power consumption of the second link. For example, the first link may be a secondary link, and the second link may be a primary link.

## Description

This application claims priority to Chinese Patent Application No. 202311133859.5, filed with the China National Intellectual Property Administration on August 31, 2023 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

In a communication system, for a terminal apparatus configured with low-power wake-up signal (low power wake up signal, LP-WUS), the terminal apparatus switches from a secondary link to a primary link only when the LP-WUS is detected on the secondary link, and receives, on the primary link, scheduling information sent by a network apparatus. If channel quality is poor, the LP-WUS cannot be detected on the secondary link. As a result, the terminal apparatus works on the secondary link for a long time, and is unable to receive the scheduling information sent by the network device in a timely manner, generating an unnecessary service delay.

### SUMMARY

To resolve the foregoing technical problem, this application provides a communication method and apparatus, to reduce occurrence of a terminal apparatus staying and working on a secondary link for a long time, and help reduce a service delay. To achieve the foregoing objective, this application uses the following technical solutions.

According to a first aspect, a communication method is provided. An execution body of the method may be a terminal apparatus. The terminal apparatus may be a terminal device, may be a component (for example, a processor, a chip, or a chip system) used in the terminal device, or may be a logical module or software that can implement all or some functions of the terminal device. The following provides descriptions by using an example in which the execution body is the terminal apparatus. The method includes: The terminal apparatus monitors a low-power wake-up signal LP-WUS from a network apparatus on a first link, and monitors a physical downlink control channel PDCCH from the network apparatus on a second link under a first condition. The first condition includes at least one of the following: a first moment arrives, where the first moment is one of periodic moments; or no LP-WUS is detected on the first link within first duration. Power consumption of the first link is less than power consumption of the second link.

For example, the first link is a secondary link, and the second link is a primary link.

That is, when the terminal apparatus monitors the LP-WUS on the first link, the terminal apparatus periodically performs link switching, for example, when a moment in the periodic moments arrives, for example, when the first moment arrives, the terminal apparatus switches to the second link, and monitors the PDCCH on the second link, so that occurrence of the terminal apparatus staying on the first link for a long time is reduced, enabling the terminal apparatus to receive scheduling information of the network apparatus in a timely manner, and helping reduce a service delay.

Alternatively, when the terminal apparatus monitors the LP-WUS on the first link, if duration in which no LP-WUS is detected reaches specific duration, for example, the first duration, the terminal apparatus switches to the second link, and monitors the PDCCH on the second link, so that occurrence of the terminal apparatus staying on the first link for a long time is reduced, enabling the terminal apparatus to receive scheduling information of the network apparatus in a timely manner, helping reduce a service delay, and ensuring a normal service receiving behavior on the terminal apparatus side.

In a possible design, the first moment is configured by the network apparatus, so that the terminal apparatus initiates link switching when the first moment arrives.

In a possible design, the first duration is configured by the network apparatus, so that the terminal apparatus initiates link switching when duration in which the terminal apparatus detects no LP-WUS reaches the first duration.

In a possible design, the method further includes: The terminal apparatus receives first information from the network apparatus, where the first information indicates to start a first timer.

That the terminal apparatus monitors the LP-WUS from the network apparatus on the first link includes: monitoring the LP-WUS from the network apparatus on the first link during running of the first timer.

That the terminal apparatus monitors the PDCCH from the network apparatus on the second link under the first condition includes: monitoring the PDCCH from the network apparatus on the second link when the first timer expires, where running duration of the first timer is the first duration.

That is, the network apparatus is the initiator. For example, within the first duration after the network apparatus configures the first timer for the terminal apparatus, if the terminal apparatus detects no LP-WUS, the terminal apparatus switches to the second link, reducing occurrence of the terminal apparatus staying on the first link for a long time.

According to a second aspect, a communication method is provided. An execution body of the method may be a terminal apparatus. The terminal apparatus may be a terminal device, may be a component (for example, a processor, a chip, or a chip system) used in the terminal device, or may be a logical module or software that can implement all or some functions of the terminal device. The following provides descriptions by using an example in which the execution body is the terminal apparatus. The method includes: The terminal apparatus receives a first signal from a network apparatus on a first link; determines, based on signal quality of the first signal, that a radio link failure RLF occurs; and sends first information to the network apparatus on a second link. The first information indicates that the RLF occurs, and power consumption of the first link is less than power consumption of the second link.

For example, the first link is a secondary link, and the second link is a primary link.

That is, the terminal apparatus determines, based on the signal quality of the first signal received on the first link, whether the RLF occurs, and enables the second link only when the RLF occurs, and reports, to the network apparatus on the second link, that the RLF occurs. On the contrary, if no RLF occurs, the second link does not need to be enabled, reducing frequency of enabling the second link. Because the power consumption of the first link is less than the power consumption of the second link, compared with a case in which the second link is frequently enabled and whether an RLF occurs is determined based on signal quality of a signal received on the second link, in this application, the first signal is received on the first link with lower power consumption, and whether an RLF occurs is determined based on the signal quality of the first signal, reducing power consumption.

In a possible design, after the terminal apparatus determines that the RLF occurs, before sending the first information to the network apparatus on the second link, the method further includes: The terminal apparatus receives a second signal from the network apparatus on the second link, and determines, based on signal quality of the second signal, that the RLF occurs.

In other words, the terminal apparatus verifies, based on the signal quality of the second signal received on the second link, whether the RLF occurs, to reduce false positives on the first link.

In a possible design, the method further includes: The terminal apparatus receives first information from the network apparatus, where the first information indicates to determine a first threshold.

That the terminal apparatus determines, based on the signal quality of the first signal, that the RLF occurs includes: determining, based on the signal quality of the first signal and the first threshold, that the RLF occurs.

That is, the network apparatus further provides the first information for the terminal apparatus, so that the terminal apparatus determines the first threshold based on the first information, and determines, based on the first threshold and the signal quality of the first signal, whether the RLF occurs.

In a possible design, the first information includes the first threshold.

In a possible design, the first information includes a first offset, where the first offset is an offset between the first threshold and a second threshold, the second threshold is used by the terminal apparatus to determine, based on the signal quality of the second signal, whether an RLF occurs, and the method is applied to the terminal apparatus.

In a possible design, the method further includes: The terminal apparatus receives second information from the network apparatus, where the second information is used to configure a first measurement gap, the first measurement gap indicates a time period in which the second link is in a disabled state, and the first measurement gap includes a time period in which the first signal is monitored on the first link.

In other words, in a time period corresponding to the first measurement gap, the first link of the terminal apparatus is enabled, and the second link is disabled, that is, the second link stops working during the working period of the first link. In other words, in this application, in a scenario in which the first link and the second link cannot work simultaneously, the time period in which the second link is disabled covers the time period in which the first link is enabled to perform measurement, so that measurement time of the first link and the second link is flexibly and properly configured.

In a possible design, the second information includes a first identifier, and the first identifier is used to identify the first measurement gap.

That is, the network apparatus configures the first measurement gap for the terminal apparatus by using the first identifier.

In a possible design, the second information is further used to configure a second measurement gap, the second measurement gap indicates a time period in which the first link is in a disabled state, and the second measurement gap includes a time period in which the second signal is monitored on the second link.

In other words, in a time period corresponding to the second measurement gap, the second link of the terminal apparatus is enabled, and the first link is disabled, that is, the first link stops working during the working period of the second link. In other words, in this application, in a scenario in which the first link and the second link cannot work simultaneously, the time period in which the first link is disabled covers the time period in which the second link is enabled to perform measurement, so that measurement time of the first link and the second link is flexibly and properly configured.

In a possible design, the second information includes a second identifier, and the second identifier is used to identify the second measurement gap.

That is, the network apparatus configures the second measurement gap for the terminal apparatus by using the second identifier.

In a possible design, the second information further indicates a first-type terminal apparatus, a measurement gap configured by using the second information is configured by the network apparatus for the first-type terminal apparatus, and the first-type terminal apparatus includes a terminal apparatus to which the method is applied.

That is, measurement gaps configured for different terminal types are different. For example, the first-type terminal apparatus is a terminal apparatus configured with LP-WUS, and the measurement gap indicated by using the second information may be configured for the terminal apparatus configured with LP-WUS. On the contrary, if the terminal apparatus configured with LP-WUS does not exist, the measurement gap indicated by using the second information does not need to be configured. In this way, the network apparatus indicates the first-type terminal apparatus by using the second information, so that the terminal apparatus is aware of a type of terminal apparatus for which the measurement gap indicated by using the second information is configured.

In a possible design, the first signal includes at least one of the following: a low-power channel state information reference signal LP-CSI-RS, a low-power reference signal LP-RS, a channel state information reference signal CSI-RS, a reference signal RS, or a synchronization signal.

In a possible design, the second signal includes at least one of the following: an LP-CSI-RS, an LP-RS, a CSI-RS, an RS, or a synchronization signal.

According to a third aspect, a communication method is provided. An execution body of the method may be a terminal apparatus. The terminal apparatus may be a terminal device, may be a component (for example, a processor, a chip, or a chip system) used in the terminal device, or may be a logical module or software that can implement all or some functions of the terminal device. The following provides descriptions by using an example in which the execution body is the terminal apparatus. The method includes: The terminal apparatus monitors a low-power wake-up signal LP-WUS from a network apparatus on a first link in a first time period of a first search space set group SSSG, where the first time period is a time period in which a physical downlink control channel PDCCH is not monitored on a second link. If detecting the LP-WUS, the terminal apparatus monitors the PDCCH from the network apparatus in a second SSSG on the second link, where power consumption of the first link is less than power consumption of the second link.

For example, the first link is a secondary link, and the second link is a primary link.

That is, the terminal apparatus monitors the LP-WUS on the first link in a time period in which the PDCCH is not monitored in the first SSSG (that is, the first time period). If the LP-WUS is detected, it means that the network apparatus most likely has a service for which the terminal apparatus is to be scheduled. Correspondingly, the terminal apparatus performs SSSG switching, to monitor the PDCCH in an SSSG after the switching, and does not need to perform SSSG switching after the PDCCH is detected on a fixed PDCCH monitoring occasion. In other words, this application provides a manner of triggering SSSG switching, to improve SSSG switching flexibility, help meet a service requirement, and reduce a service delay.

In a possible design, a PDCCH monitoring periodicity in the first SSSG is greater than a PDCCH monitoring periodicity in the second SSSG.

In other words, PDCCH monitoring occasions in the first SSSG are relatively sparse, and PDCCH monitoring occasions in the second SSSG are relatively dense. As the network apparatus most likely has a service for which the terminal apparatus is to be scheduled, the terminal apparatus works in the second SSSG having denser PDCCH monitoring occasions, helping the terminal apparatus with successful PDCCH detection, and reducing a service delay.

In a possible design, a moment at which the terminal apparatus switches from the first SSSG to the second SSSG is determined based on a moment at which the LP-WUS is detected.

For example, an SSSG switching moment (that is, the moment of switching from the first SSSG to the second SSSG) is a moment at which the LP-WUS is detected.

According to a fourth aspect, a communication method is provided. An execution body of the method may be a terminal apparatus. The terminal apparatus may be a terminal device, may be a component (for example, a processor, a chip, or a chip system) used in the terminal device, or may be a logical module or software that can implement all or some functions of the terminal device. The following provides descriptions by using an example in which the execution body is the terminal apparatus. The method includes: The terminal apparatus monitors a physical downlink control channel PDCCH from a network apparatus in a third search space set group SSSG on a second link, where the third SSSG is one of at least two preconfigured SSSGs. The terminal apparatus monitors a low-power wake-up signal LP-WUS from the network apparatus on a first link under a second condition. The second condition includes at least one of the following: duration of PDCCH monitoring in the third SSSG reaches first duration; or indication information from the network apparatus is received, where the indication information includes an SSSG index, and the SSSG index indicates to monitor the LP-WUS on the first link. Power consumption of the first link is less than power consumption of the second link.

For example, the first link is a secondary link, and the second link is a primary link.

That is, when the terminal apparatus monitors the PDCCH in the third SSSG on the second link, if duration of PDCCH monitoring reaches specific duration, for example, the first duration, the terminal apparatus switches to the first link, and monitors the LP-WUS on the first link. Because that the terminal apparatus has most likely completed a service within the first duration, the terminal apparatus may enter an LP-WUS working mode, to save power consumption while considering a service requirement.

Alternatively, when the terminal apparatus monitors the PDCCH in the third SSSG on the second link, if the terminal apparatus receives the indication information of the network apparatus, and the indication information includes the SSSG index, where the SSSG index indicates that the terminal apparatus may switch to the first link and monitor the LP-WUS on the first link, the terminal apparatus may enter the LP-WUS working mode based on the indication information, to save power consumption while considering a service requirement.

In a possible design, that the terminal apparatus monitors the LP-WUS from the network apparatus on the first link under the second condition includes: monitoring the LP-WUS from the network apparatus on the first link when a second timer expires, where a start moment of the second timer is a moment of switching to the third SSSG, and running duration of the second timer is the first duration.

That is, the terminal apparatus may use the second timer to record the duration of PDCCH monitoring, and indicates the terminal apparatus to enter the LP-WUS working mode when the second timer expires.

In a possible design, the SSSG index includes an index of a fourth SSSG, a PDCCH monitoring periodicity in the fourth SSSG is greater than a PDCCH monitoring periodicity in the third SSSG.

In other words, PDCCH monitoring occasions in the fourth SSSG are relatively sparse, and PDCCH monitoring occasions in the third SSSG are relatively dense. In this application, the terminal device uses the LP-WUS working mode and replaces the fourth SSSG (that is, an SSSG having relatively sparse PDCCH monitoring occasions), to save power.

In a possible design, the method further includes: If detecting the LP-WUS, the terminal apparatus monitors the PDCCH from the network apparatus in the third SSSG on the second link.

That is, the terminal apparatus monitors the LP-WUS on the first link. If the LP-WUS is detected, it means that the network apparatus most likely has a service for which the terminal apparatus is to be scheduled. Correspondingly, the terminal apparatus monitors the PDCCH again in the third SSSG on the second link, to monitor scheduling information from the network apparatus, so that service transmission can be completed in a timely manner while power consumption is reduced.

According to a fifth aspect, a communication method is provided. An execution body of the method may be a network apparatus. The network apparatus may be a network device, may be a component (for example, a processor, a chip, or a chip system) used in the network device, or may be a logical module or software that can implement all or some functions of the network device. The following provides descriptions by using an example in which the execution body is the network apparatus. The method includes: The network apparatus sends a low-power wake-up signal LP-WUS to a terminal apparatus. The network apparatus sends a physical downlink control channel PDCCH to the terminal apparatus, where moments of sending the PDCCH include a first moment, and the first moment is one of periodic moments.

In a possible design, the first moment is configured by the network apparatus.

For technical effects brought by any design scheme in the fifth aspect, refer to technical effects brought by different design schemes in the first aspect. Details are not described herein again.

According to a sixth aspect, a communication method is provided. An execution body of the method may be a network apparatus. The network apparatus may be a network device, may be a component (for example, a processor, a chip, or a chip system) used in the network device, or may be a logical module or software that can implement all or some functions of the network device. The following provides descriptions by using an example in which the execution body is the network apparatus. The method includes: The network apparatus sends first information to a terminal apparatus. The first information indicates to start a first timer, and a running status of the first timer indicates whether to monitor a low-power wake-up signal LP-WUS on a first link and indicates whether to monitor a physical downlink control channel PDCCH on a second link.

In a possible design, running duration of the first timer is configured by the network apparatus.

For technical effects brought by any design scheme in the sixth aspect, refer to technical effects brought by different design schemes in the first aspect. Details are not described herein again.

According to a seventh aspect, a communication method is provided. An execution body of the method may be a network apparatus. The network apparatus may be a network device, may be a component (for example, a processor, a chip, or a chip system) used in the network device, or may be a logical module or software that can implement all or some functions of the network device. The following provides descriptions by using an example in which the execution body is the network apparatus. The method includes: The network apparatus sends second information to a terminal apparatus. The second information is used to configure a first measurement gap, the first measurement gap indicates a time period in which a second link is in a disabled state, and the first measurement gap includes a time period in which a first signal is monitored on a first link. Power consumption of the first link is less than power consumption of the second link.

In a possible design, the second information includes a first identifier, and the first identifier is used to identify the first measurement gap.

In a possible design, the second information is further used to configure a second measurement gap, the second measurement gap indicates a time period in which the first link is in a disabled state, and the second measurement gap includes a time period in which a second signal is monitored on the second link.

In a possible design, the second information includes a second identifier, and the second identifier is used to identify the second measurement gap.

In a possible design, the second information further indicates a first-type terminal apparatus, a measurement gap indicated by using the second information is configured for the first-type terminal apparatus, and the first-type terminal apparatus includes the terminal apparatus.

For technical effects brought by any design scheme in the seventh aspect, refer to technical effects brought by different design schemes in the second aspect. Details are not described herein again.

According to an eighth aspect, a communication method is provided. An execution body of the method may be a network apparatus. The network apparatus may be a network device, may be a component (for example, a processor, a chip, or a chip system) used in the network device, or may be a logical module or software that can implement all or some functions of the network device. The following provides descriptions by using an example in which the execution body is the network apparatus. The method includes: The network apparatus sends a low-power wake-up signal LP-WUS to a terminal apparatus in a first time period of a first search space set group SSSG, and sends a PDCCH to the terminal apparatus in a second SSSG.

In a possible design, a PDCCH monitoring periodicity in the first SSSG is greater than a PDCCH monitoring periodicity in the second SSSG.

In a possible design, a moment of switching from the first SSSG to the second SSSG is determined based on a moment at which the LP-WUS is sent.

For technical effects brought by any design scheme in the eighth aspect, refer to technical effects brought by different design schemes in the third aspect. Details are not described herein again.

According to a ninth aspect, a communication method is provided. An execution body of the method may be a network apparatus. The network apparatus may be a network device, may be a component (for example, a processor, a chip, or a chip system) used in the network device, or may be a logical module or software that can implement all or some functions of the network device. The following provides descriptions by using an example in which the execution body is the network apparatus. The method includes: The network apparatus sends a physical downlink control channel PDCCH to a terminal apparatus in a third search space set group SSSG, where the third SSSG is one of at least two preconfigured SSSGs. The network apparatus sends a low-power wake-up signal LP-WUS to the terminal apparatus under a second condition. The second condition includes at least one of the following: duration of PDCCH sending in the third SSSG reaches first duration; or indication information is sent to terminal apparatus, where the indication information includes an SSSG index, and the SSSG index indicates the terminal apparatus to monitor the LP-WUS.

In a possible design, the SSSG index includes an index of a fourth SSSG, a PDCCH monitoring periodicity in the fourth SSSG is greater than a PDCCH monitoring periodicity in the third SSSG.

In a possible design, after sending the LP-WUS to the terminal apparatus, the method further includes: The network apparatus sends the PDCCH to the terminal apparatus in the third SSSG.

For technical effect brought by any design scheme in the ninth aspect, refer to technical effects brought by different design schemes in the fourth aspect. Details are not described herein again.

According to a tenth aspect, a communication apparatus is provided to implement the foregoing methods. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation thereof. The transceiver module may also be referred to as a transceiver unit, and is configured to implement a sending function and/or a receiving function in any one of the foregoing aspects and any possible implementation thereof. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and any possible implementation thereof.

According to an eleventh aspect, a communication apparatus is provided, which includes a processor and a memory. The processor is coupled to the memory. The memory stores program instructions. When the program instructions stored in the memory are executed by the processor, the communication apparatus is caused to perform the method according to any one of the foregoing aspects or any possible design of any one of the foregoing aspects.

According to a twelfth aspect, a communication apparatus is provided, which includes a processor. The processor is configured to execute a computer program or instructions, to cause the communication apparatus to perform the method according to any one of the foregoing aspects.

Optionally, the communication apparatus further includes a memory. The memory may be coupled to the processor. Alternatively, the memory may be independent of the processor. For example, the memory and the processor are two independent modules. The memory may be outside the communication apparatus, or may be inside the communication apparatus.

According to a thirteenth aspect, a computer-readable storage medium is provided. The computer-readable storage medium stores a computer program or instructions. When the computer program or instructions are run on a communication apparatus, the communication apparatus is caused to perform the method according to any one of the foregoing aspects.

According to a fourteenth aspect, a computer program product including instructions is provided. When the computer program product runs on a communication apparatus, the communication apparatus is caused to perform the method according to any one of the foregoing aspects.

The communication apparatus provided in any one of the tenth aspect to the fourteenth aspect may be the terminal apparatus in the first aspect, the terminal apparatus in the second aspect, the terminal apparatus in the third aspect, or the terminal apparatus in the fourth aspect, for example, a chip or a chip system. Alternatively, the communication apparatus may be the network apparatus in the fifth aspect, the network apparatus in the sixth aspect, the network apparatus in the seventh aspect, the network apparatus in the eighth aspect, or the network apparatus in the ninth aspect, for example, a chip or a chip system. When the apparatus is a chip system, the apparatus may include a chip, or may include a chip and another discrete device.

It may be understood that, when the communication apparatus provided in any one of the tenth aspect to the fourteenth aspect is a chip, a sending action/function of the communication apparatus may be understood as outputting information, and a receiving action/function of the communication apparatus may be understood as inputting information.

According to a fifteenth aspect, a communication system is provided. The communication system includes a terminal apparatus and a network apparatus. The terminal apparatus is configured to perform the method in the first aspect or any possible design of the first aspect, and the network apparatus is configured to perform the method in the fifth aspect or any possible design of the fifth aspect, or the network apparatus is configured to perform the method in the sixth aspect or any possible design of the sixth aspect. Alternatively, the terminal apparatus is configured to perform the method in the second aspect or any possible design of the second aspect, and the network apparatus is configured to perform the method in the seventh aspect or any possible design of the seventh aspect. Alternatively, the terminal apparatus is configured to perform the method in the third aspect or any possible design of the third aspect, and the network apparatus is configured to perform the method in the eighth aspect or any possible design of the eighth aspect. Alternatively, the terminal apparatus is configured to perform the method in the fourth aspect or any possible design of the fourth aspect, and the network apparatus is configured to perform the method in the ninth aspect or any possible design of the ninth aspect.

For technical effects brought by any design scheme from the tenth aspect to the fifteenth aspect, refer to technical effects brought by different design schemes from the first aspect to the fourth aspect. Details are not described herein again.

### BRIEF DESCRIPTION OF DRAWINGS

FIG. 1 is a diagram of an architecture of a communication system according to an embodiment of this application;
FIG. 2 is a diagram of a working principle of a low-power wake-up signal according to an embodiment of this application;
FIG. 3 is another diagram of a working principle of a low-power wake-up signal according to an embodiment of this application;
FIG. 4 is a principle diagram of determining a radio link failure according to an embodiment of this application;
FIG. 5 is a diagram of a working status of a search space set group according to an embodiment of this application;
FIG. 6 is another diagram of a working status of a search space set group according to an embodiment of this application;
FIG. 7 is still another diagram of a working status of a search space set group according to an embodiment of this application;
FIG. 8 is a schematic flowchart of a communication method according to an embodiment of this application;
FIG. 9a is a schematic flowchart of another communication method according to an embodiment of this application;
FIG. 9b is a schematic flowchart of another communication method according to an embodiment of this application;
FIG. 10a is a schematic flowchart of still another communication method according to an embodiment of this application;
FIG. 10b is a schematic flowchart of still another communication method according to an embodiment of this application;
FIG. 11a is a schematic flowchart of still another communication method according to an embodiment of this application;
FIG. 11b is a schematic flowchart of still another communication method according to an embodiment of this application;
FIG. 12 is a diagram of a working status according to an embodiment of this application;
FIG. 13a is a schematic flowchart of still another communication method according to an embodiment of this application;
FIG. 13b is a schematic flowchart of still another communication method according to an embodiment of this application;
FIG. 14 is another principle diagram of determining a radio link failure according to an embodiment of this application;
FIG. 15a is a schematic flowchart of still another communication method according to an embodiment of this application;
FIG. 15b is a schematic flowchart of still another communication method according to an embodiment of this application;
FIG. 16a is a schematic flowchart of still another communication method according to an embodiment of this application;
FIG. 16b is a schematic flowchart of still another communication method according to an embodiment of this application;
FIG. 17 is a schematic flowchart of still another communication method according to an embodiment of this application;
FIG. 18 is still another diagram of a working status of a search space set group according to an embodiment of this application;
FIG. 19 is a schematic flowchart of still another communication method according to an embodiment of this application;
FIG. 20 is still another diagram of a working status of a search space set group according to an embodiment of this application;
FIG. 21 is still another diagram of a working status of a search space set group according to an embodiment of this application;
FIG. 22a is still another diagram of a working status of a search space set group according to an embodiment of this application;
FIG. 22b is still another diagram of a working status of a search space set group according to an embodiment of this application;
FIG. 23 is a diagram of a structure of a communication apparatus according to an embodiment of this application;
FIG. 24 is a diagram of a structure of another communication apparatus according to an embodiment of this application; and
FIG. 25 is a diagram of a structure of still another communication apparatus according to an embodiment of this application.

### DESCRIPTION OF EMBODIMENTS

The following describes technical solutions of this application with reference to accompanying drawings.

The terms "system" and "network"are interchangeable in this application. All aspects, embodiments, or features are presented in this application by describing a system that may include multiple devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" mean giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "of (of)", "relevant (corresponding, relevant)", and "corresponding (corresponding)" may be interchangeably used sometimes. It should be noted that meanings expressed by the terms are consistent when differences between the terms are not emphasized.

In embodiments of this application, "at least one" means one or more, and "multiple" means two or more. The character "/" generally indicates an "or" relationship between the associated objects. For example, "A and/or B" may represent the following cases: Only A exists; only B exists; and both A and B exist, where A and B may be singular or plural. "At least one of the following items (pieces)" or a similar expression thereof represents any combination of the listed items. For example, "at least one of A, B, and/or C" may represent the following cases: Only A exists; only B exists; only C exists; both A and B exist; both A and C exist; both B and C exist; and both A, B, and C exist, where A, B, and C may be singular or plural.

In addition, in this application, embodiments may be combined with each other, even if these embodiments are specific to different technical problems. For example, the technical solutions provided in the implementations of embodiments of this application may be combined to form a new technical solution based on an internal logical relationship of the technical solutions.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

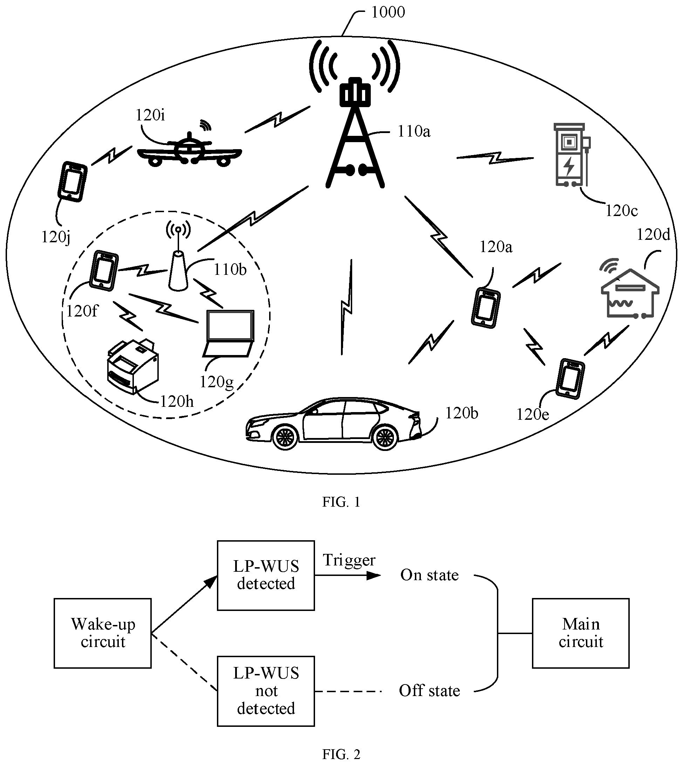

FIG. 1 is a diagram of an architecture of a communication system 1000 to which an embodiment of this application is applied. As shown in FIG. 1, the communication system 1000 includes at least one network apparatus (for example, 110a and 110b in FIG. 1) and at least one terminal apparatus (for example, 120a to 120j in FIG. 1). The terminal apparatus may communicate with the network apparatus in a wireless manner. Optionally, different network apparatuses may communicate with each other. Optionally, different terminal apparatuses may communicate with each other.

It should be noted that FIG. 1 is merely a diagram. Although not shown, another network apparatus may further be included in the communication system 1000. For example, the communication system 1000 may further include one or more of a core network (core network, CN) device, a wireless relay device, and a wireless backhaul device. This is not specifically limited herein.

The network apparatus may be connected to the core network device in a wireless or wired manner. The core network device and the network apparatus may be different independent physical devices, or functions of the core network device and logical functions of the network apparatus may be integrated into a same physical device, or some functions of the core network device and some functions of the network apparatus may be integrated into one physical device. This is not specifically limited in embodiments of this application.

Optionally, the network apparatus is a network side device having a wireless transceiver function. The network apparatus may be an apparatus that is in a radio access network (radio access network, RAN) and that provides a wireless communication function for the terminal apparatus, and is referred to as a RAN device. The RAN may be an access network in the 3rd generation partnership project (3rd generation partnership project, 3GPP), for example, a 4G network, a 5G network, or a future-oriented 6G network. The RAN may alternatively be an open access network (open RAN, O-RAN, or ORAN), a cloud radio access network (cloud radio access network, CRAN), or a communication network including two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in the 5th generation (5th generation, 5G) mobile communication system, a next generation base station in the 6th generation (6th generation, 6G) mobile communication system, a base station in a future mobile communication system, a wireless fidelity (wireless fidelity, Wi-Fi) system, a long range radio (long range radio, LoRa) system, or an access node in an internet of vehicles system. The RAN device may alternatively be a module or a unit that completes some functions of the base station, for example, may be a central unit (central unit, CU), may be a distributed unit (distributed unit, DU), or may be a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to the 3rd generation partnership project (3rd generation partnership project, 3GPP). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the network apparatus is used as an abbreviation of the radio access network device, and the base station is used as an example of the radio access network device.

Optionally, the terminal apparatus accesses a core network through the network apparatus. The terminal apparatus includes a device that provides a voice and/or data connectivity for a user. Specifically, the terminal apparatus includes a device that provides the voice for the user, includes a device that provides the data connectivity for the user, or includes a device that provides the voice and the data connectivity for the user. For example, the terminal apparatus may include a handheld device with a wireless connection function or a processing device connected to a wireless modem. The terminal apparatus may communicate with the core network through the radio access network, exchange speech or data with the RAN, or exchange speech and data with the RAN. The terminal apparatus may include user equipment (user equipment, UE), a wireless terminal apparatus, a mobile terminal apparatus, a D2D terminal apparatus, a V2X terminal apparatus, a machine-to-machine/machine-type communication (machine-to-machine/machine-type communication, M2M/MTC) terminal apparatus, an internet of things (internet of things, IoT) terminal apparatus, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal apparatus may include a mobile phone (or referred to as a "cellular" phone), a computer with a mobile terminal apparatus, or a portable, pocket-sized, handheld, or computer built-in mobile apparatus. For example, the terminal apparatus may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal apparatus may alternatively include a limited device, for example, a device with relatively low power consumption, a device with a limited storage capability, or a device with a limited computing capability. For example, the terminal apparatus includes an information sensing device such as a barcode, radio frequency identification (radio frequency identification, RFID), a sensor, a global positioning system (global positioning system, GPS), or a laser scanner.

If the various terminal apparatuses described above are located in a vehicle (for example, placed in the vehicle or installed in the vehicle), the terminal apparatuses may be all considered as vehicle-mounted terminal apparatuses. For example, the vehicle-mounted terminal apparatuses are also referred to as on-board units (on-board unit, OBU).

In embodiments of this application, the terminal apparatus may further include a relay (relay). Alternatively, it is understood as that any apparatus that can perform data communication with the base station may be considered as the terminal apparatus.

In embodiments of this application, an apparatus configured to implement a function of the terminal apparatus may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, an example in which an apparatus configured to implement a function of a terminal is a terminal apparatus is used for description.

It should be understood that the network apparatus and the terminal apparatus may be at fixed locations, or may be mobile. The network apparatus and the terminal apparatus may be deployed on the land, including indoor, outdoor, handheld, or vehicle-mounted; may be deployed on water; or may be deployed on an airplane, a balloon, and a satellite in the air. Application scenarios of the network apparatus and the terminal apparatus are not limited in embodiments of this application.

Roles of the network apparatus and the terminal apparatus may be relative. For example, a helicopter or an uncrewed aerial vehicle 120i in FIG. 1 may be configured as a mobile base station. For the terminal apparatus 120j that accesses the radio access network through 120i, the terminal apparatus 120i is a network apparatus. However, for the network apparatus 110a, 120i is a terminal apparatus. In other words, 110a and 120i communicate with each other by using a radio air interface protocol. Certainly, 110a and 120i may alternatively communicate with each other by using an interface protocol between base stations. In this case, for 110a, 120i is also a network apparatus. Therefore, both the network apparatus and the terminal apparatus may be collectively referred to as communication apparatuses. 110a and 110b in FIG. 1 may be referred to as communication apparatuses having a function of a network apparatus, and 120a to 120j in FIG. 1 may be referred to as communication apparatuses having a function of a terminal apparatus.

Communication may be performed between a network apparatus and a terminal apparatus, between network apparatuses, and between terminal apparatuses by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the network apparatus may alternatively be performed by a module (for example, a chip) in the network device, or may be performed by a control subsystem including the function of the network device. The control subsystem including the function of the network device herein may be a control center in the foregoing application scenarios such as smart grid, industrial control, intelligent transportation, and smart city. A function of the terminal apparatus may alternatively be performed by a module (for example, a chip or a modem) in the terminal device, or may be performed by an apparatus including the function of the terminal device.

In embodiments of this application, the network apparatus sends a downlink signal or downlink information to the terminal apparatus, where the downlink information is carried on a downlink channel. The terminal apparatus sends an uplink signal or uplink information to the network apparatus, where the uplink information is carried on an uplink channel. To communicate with the network apparatus, the terminal apparatus needs to establish a wireless connection to a cell controlled by the network apparatus. The cell having established the wireless connection to the terminal apparatus is referred to as a serving cell of the terminal apparatus. When communicating with the serving cell, the terminal apparatus is further interfered with by a signal from a neighboring cell.

It should be noted that the solutions in embodiments of this application may alternatively be applied to another communication system, and a corresponding name may alternatively be replaced with a name of a corresponding function in the another communication system.

For ease of understanding embodiments of this application, the following first briefly describes terms in embodiments of this application. It should be understood that these descriptions are merely for ease of understanding embodiments of this application, and should not constitute any limitation on this application.

### 1. Radio resource control (radio resource control, RRC) state

The terminal apparatus has three RRC states: an RRC connected (connected) state, an RRC idle (idle) state, and an RRC inactive (inactive) state.

The RRC connected state means that the terminal apparatus establishes an RRC connection to the network apparatus, and may perform data transmission over the RRC connection. In addition, the RRC connected state may also be referred to as a connected state for short. In embodiments of this application, the "connected state" and the "RRC connected state" are a same concept, and may be replaced with each other.

The RRC idle state means that the terminal apparatus does not establish an RRC connection to the network apparatus, and the network apparatus (such as a base station) does not store a context of the terminal apparatus. If the terminal apparatus needs to switch from the RRC idle state to the RRC connected state, the terminal apparatus needs to initiate an RRC connection establishment process. In addition, the RRC idle state may also be referred to as an idle state for short. In embodiments of this application, the "idle state" and the "RRC idle state" are a same concept, and may be replaced with each other.

The RRC inactive state means that the terminal apparatus previously enters the RRC connected state at an anchor base station, and then the anchor base station releases the RRC connection, but the anchor base station stores the context of the terminal apparatus. If the terminal apparatus needs to re-enter the RRC connected state from the RRC inactive state, the terminal apparatus needs to initiate an RRC connection resume process (or described as an RRC connection re-establishment process) at a base station on which the terminal apparatus currently camps.

It should be understood that, because the terminal apparatus may be in a moving state, the base station on which the terminal apparatus currently camps and the anchor base station of the terminal apparatus may be a same base station, or may be different base stations. In comparison with the RRC establishment process, the RRC resume process has a shorter delay and lower signaling overheads. However, the anchor base station needs to store the context of the terminal apparatus, and the anchor base station incurs storage overheads. In addition, the RRC inactive state may also be referred to as an inactive state for short. In embodiments of this application, the "inactive state" and the "RRC inactive state" are a same concept, and may be replaced with each other.

In embodiments of this application, the following five concepts have a same meaning and may be replaced with each other: an inactive state, a deactivating state, a non-active state, a deactivated state, or a deactivation state. For example, the RRC inactive state may also be described as an RRC non-active state, which is referred to as a non-active state for short.

### 2. Two circuits included by the terminal apparatus:

The terminal apparatus includes a main circuit and a wake-up circuit, as shown in FIG. 2.

### 2-1. Main circuit of the terminal apparatus:

When the terminal apparatus is in an idle/inactive state, the terminal apparatus determines a paging frame (paging frame, PF) and a position of a paging occasion (paging occasion, PO) in the PF based on an identifier (identifier, ID) (for example, a UE ID) of the terminal apparatus, and then receives paging in the PO. Regardless of whether the terminal apparatus receives paging in the idle state/inactive state or receives data in the connected state, the main circuit in the terminal apparatus may be used to complete these functions.

The main circuit may also be known by other descriptions, such as a main receiver and a primary link receiver (main receiver, MR). In embodiments of this application, the MR is used as an example for description, which should not be construed as a limitation on embodiments of this application.

In embodiments of this application, meanings indicated by the following descriptions are the same, and may be replaced with each other.

The terminal apparatus works using the main circuit, the terminal apparatus works on the main circuit, the terminal apparatus receives or sends a signal using the main circuit, or the main circuit of the terminal apparatus is in a working/on state.

In embodiments of this application, the main circuit may be replaced with a primary link. The primary link indicates a connection relationship between the terminal apparatus and the network apparatus, and is a logical concept rather than a physical entity. A 5G NR system is used as an example. The primary link may also be described as an NR primary link.

Correspondingly, meanings indicated by the following descriptions are the same, and may be replaced with each other.

The terminal apparatus works on the (NR) primary link, the terminal apparatus works over the (NR) primary link, the terminal apparatus receives or sends a signal on the (NR) primary link, or the (NR) primary link of the terminal apparatus is in a working/on state.

In embodiments of this application, the primary link is used as an example for describing a working status of the terminal apparatus, which should not be construed as a limitation on embodiments of this application.

### 2-2. Wake-up circuit of the terminal apparatus:

To further reduce power consumption of the terminal apparatus, the terminal apparatus may further receive a signal using a separate low-power small circuit. The low-power small circuit may be implemented by using a separate small circuit with a simple structure or a chip, and has low power consumption. The low-power small circuit may be referred to as a wake-up circuit.

The wake-up circuit may also be known by other descriptions, for example, a wake-up radio (wake up radio, WUR) circuit, a low-power circuit, a low-power wake-up radio (low power wake up radio, LP-WUR) circuit, a wake-up receiver (wake up receiver, WUR) module, and a secondary link/low-power receiver (low power receiver, LR). In embodiments of this application, the LR is used as an example for description, which should not be construed as a limitation on embodiments of this application.

In embodiments of this application, meanings indicated by the following descriptions are the same, and may be replaced with each other.

The terminal apparatus works using the wake-up circuit, the terminal apparatus works on the wake-up circuit, the terminal apparatus monitors or receives a low-power wake-up signal (low power wake up signal, LP-WUS) using the wake-up circuit, or the wake-up circuit of the terminal apparatus is in a working state.

In embodiments of this application, the wake-up circuit may be replaced with a secondary link. The secondary link indicates a connection relationship between the terminal apparatus and the network apparatus, and is a logical concept rather than a physical entity.

Correspondingly, meanings indicated by the following descriptions are the same, and may be replaced with each other.

The terminal apparatus works using the secondary link, the terminal apparatus works on the secondary link, the terminal apparatus monitors or receives an LP-WUS on the secondary link, or the secondary link of the terminal apparatus is in a working state.

In embodiments of this application, meanings indicated by the following descriptions are the same, and may be replaced with each other: monitoring or detecting. In embodiments of this application, monitoring is used as an example for description.

In embodiments of this application, the secondary link is used as an example for describing a working status of the terminal apparatus, which should not be construed as a limitation on embodiments of this application.

For example, FIG. 2 is a diagram illustrating a terminal apparatus receiving an LP-WUS using a wake-up circuit.

As shown in FIG. 2, for the terminal apparatus in an idle/inactive state, the terminal apparatus monitors the LP-WUS using the wake-up circuit. If detecting no LP-WUS using the wake-up circuit, the terminal apparatus controls a main circuit to be in an off state (or referred to as a sleep state); or if detecting the LP-WUS using the wake-up circuit, the terminal apparatus triggers the main circuit to wake up, in other words, controls the main circuit to be in an on state or a working state. After the main circuit is woken up, the terminal apparatus may perform a paging receiving process.

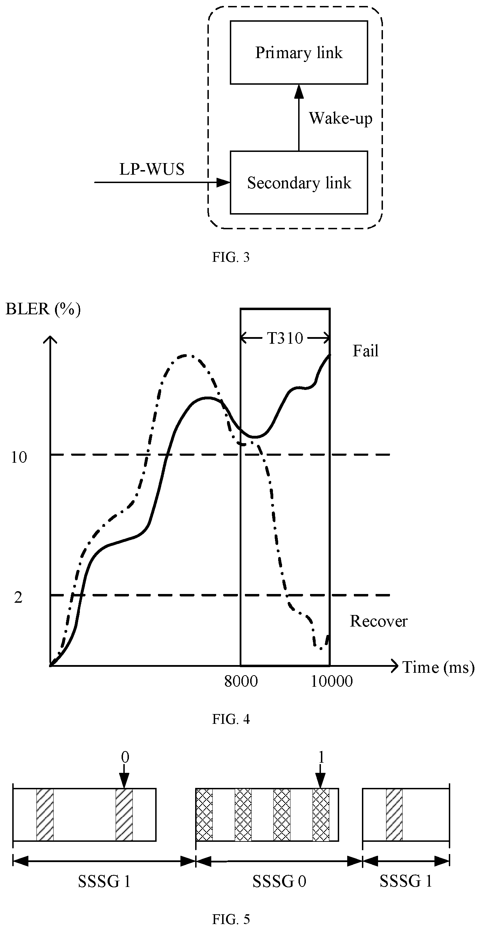

For another example, FIG. 3 is a diagram illustrating a terminal apparatus receiving an LP-WUS using a secondary link.

As shown in FIG. 3, for the terminal apparatus in an idle/inactive state, the terminal apparatus monitors the LP-WUS on the secondary link. If detecting no LP-WUS on the secondary link, the terminal apparatus controls a primary link to be in a disabled state (or referred to as a sleep state, or referred to as stop working); or if detecting the LP-WUS on the secondary link, the terminal apparatus triggers the primary link to wake up, in other words, controls the primary link to be in an enabled state or a working state. After the primary link is woken up, the terminal apparatus may perform a paging receiving process.

It should be understood that FIG. 2 or FIG. 3 is mainly described by using an example in which the LP-WUS indicates some information related to paging, which should not be construed as a limitation on embodiments of this application. It is clear that the LP-WUS may alternatively indicate all information related to paging. In this case, after the primary link is woken up, random access and the like may be performed.

### 3. Radio link failure (radio link failure, RLF) determining mechanism

Currently, in an RLF determining mechanism, a terminal apparatus measures downlink radio link quality based on a cell-specific reference signal. The cell-specific reference signal includes a channel state information reference signal (channel state information reference signal, CSI-RS), a synchronization signal and physical broadcast channel block (synchronization signal and physical broadcast channel block, SSB), and the like. A measurement quantity of the cell-specific reference signal is mapped to a hypothetical physical downlink control channel (physical downlink control channel, PDCCH) block error rate (block error rate, BLER), which is compared with a threshold. The threshold includes Qout and Qin, where Qout corresponds to a 10% BLER of hypothetical PDCCH transmission, and Qin corresponds to a 2% BLER of hypothetical PDCCH transmission, as shown in FIG. 4.

As shown in FIG. 4, when the terminal apparatus consecutively receives Qout of a specific quantity (that is, the measurement result of the cell-specific reference signal exceeds PDCCH BLER 10%), a timer T310 is started. If the terminal apparatus does not consecutively receive Qin of a specific quantity till the timer T310 expires (that is, the measurement result of the cell-specific reference signal is lower than PDCCH BLER 2%), it means that an RLF occurs, a radio link has a quality problem, and an RRC re-establishment process is triggered, as shown by the solid curve in FIG. 4. On the contrary, during running of the timer T310, if the terminal apparatus consecutively receives Qin of a specific quantity (that is, the measurement result of the cell-specific reference signal is lower than PDCCH BLER 2%), radio link quality is recovered (recover), no RLF occurs, and an RRC re-establishment process does not need to be triggered, as shown by the dashed curve in FIG. 4.

In some embodiments, the terminal apparatus performs RLF determining according to a specific periodicity.

### 4. Measurement configuration information delivery

Usually, the measurement configuration information is transferred by using an RRC reconfiguration (RRCReconfiguration) message, and is delivered by a network apparatus (for example, a gNodeB) to a terminal apparatus. The terminal apparatus performs measurement based on the measurement configuration information, and reports a measurement result to the network apparatus through a measurement report. The measurement configuration information mainly includes a measurement object (measurement object), a measurement gap (measurement gap), a reporting configuration, a trigger quantity, a measurement identifier (identity, ID), and the like. For details, refer to related 3GPP technical specifications. Details are not described again.

In embodiments of this application, the measurement gap may be understood as a time period from the terminal apparatus leaving a current frequency for another frequency for measurement, and is involved in an inter-frequency measurement scenario and an inter-RAT measurement scenario. In a measurement gap configuration, a gap offset (gapOffset) is an offset of a measurement gap repetition periodicity (mgrp), mgl is a measurement gap length, mgrp is a measurement gap repetition periodicity, and mgta is a measurement gap timing advance. Gap duration configured using the preceding parameters covers the time period from the terminal apparatus leaving a current frequency for another frequency for measurement.

In addition, a gap identity (gap identity, GAPId) is introduced in the R17 standard, and the GAPId is used to identify a measurement gap configuration, for example, a measurement gap configuration configured based on a terminal apparatus or a frequency range (frequency range, FR).

### 5. Search space set group (search space set group, SSSG) technology

In an SSSG switching mechanism, two or three SSSGs may be configured for PDCCH monitoring density in a primary bandwidth part (bandwidth part, BWP), and the PDCCH monitoring density varies between different SSSGs.

As shown in FIG. 5, it is assumed two groups, for example, an SSSG 0 and an SSSG 1, are configured for PDCCH monitoring density in a primary BWP. The terminal apparatus monitors a PDCCH in a time period of a block filled with slashes or a block filled with grid lines, to save energy.

In FIG. 5, the terminal apparatus first monitors the PDCCH in a search space of the SSSG 1. When detected DCI indicates '0', it may be understood that the DCI indicates an index of the SSSG 0. After an application delay (application delay), the terminal apparatus switches to the SSSG 0 having denser monitoring occasions. Then, the terminal apparatus monitors the PDCCH in a search space of the SSSG 0. When detected DCI indicates '1', it may be understood that the DCI indicates an index of the SSSG 1. After an application delay, the terminal apparatus switches back to the SSSG 1, and monitors the PDCCH in the search space of the SSSG 1.

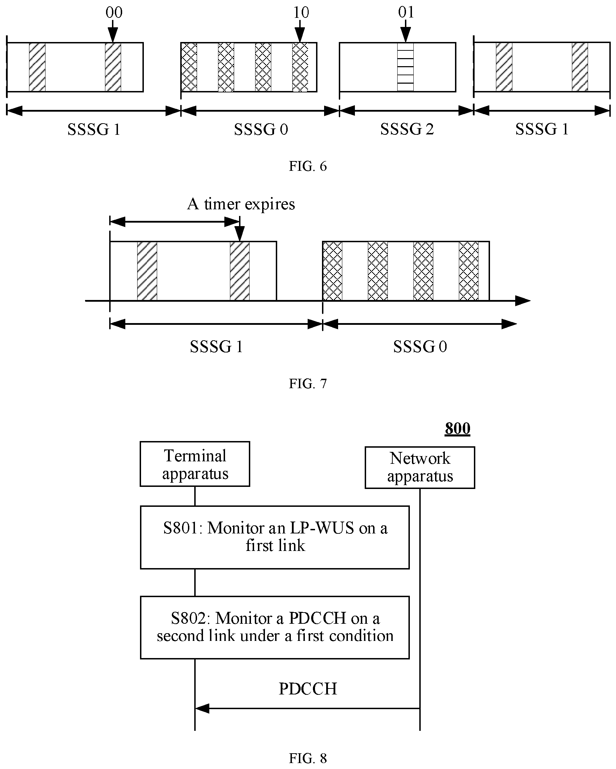

As shown in FIG. 6, it is assumed three groups, for example, an SSSG 0, an SSSG 1, and an SSSG 2, are configured for PDCCH monitoring density in a primary BWP. The terminal apparatus monitors a PDCCH in a time period of a block filled with slashes, a block filled with grid lines, or a block filled with horizontal lines, to save energy.

In FIG. 6, the terminal apparatus first monitors the PDCCH in a search space of the SSSG 1. When detected DCI indicates '00', it may be understood that the DCI indicates an index of the SSSG 0. After an application delay, the terminal apparatus switches to the SSSG 0 having denser monitoring occasions. Then, the terminal apparatus monitors the PDCCH in a search space of the SSSG 0. When detected DCI indicates '10', it may be understood that the DCI indicates an index of the SSSG 2. After an application delay, the terminal apparatus switches to the SSSG 2 that has sparser monitoring occasions than the SSSG 1. Then, the terminal apparatus monitors the PDCCH in a search space of the SSSG 2. When detected DCI indicates '01', it may be understood that the DCI indicates an index of the SSSG 1. After an application delay, the terminal apparatus switches to the SSSG 1. Then, the terminal apparatus monitors the PDCCH in the search space of the SSSG 1.

In addition, '11' in the DCI are reserved bits.

In addition to indicating SSSG switching by using a bit in the DCI, the network apparatus may configure a timer for the terminal apparatus, which for example, is referred to as a search space switching timer (searchSpaceSwitchTimer). After the timer expires and after a switching delay, the terminal apparatus may switch to an SSSG of another sparseness degree.

As shown in FIG. 7, it is assumed two groups, for example, an SSSG 0 and an SSSG 1, are configured for PDCCH monitoring density in a primary BWP. The terminal apparatus starts a timer (for example, the foregoing searchSpaceSwitchTimer) at a start moment of the SSSG 1. After the timer expires, the terminal apparatus performs SSSG switching, for example, switches to the SSSG 0, and monitors a PDCCH in a search space of the SSSG 0.

### Technical problem 1

It can be learned from FIG. 2 or FIG. 3 that, for a terminal apparatus configured with LP-WUS, the terminal apparatus switches from a secondary link to a primary link only when an LP-WUS is detected on the secondary link. It may be understood that the terminal apparatus triggers, by using only the LP-WUS detected on the secondary link, the primary link to work, and receives, on the primary link, scheduling information sent by a network apparatus. If channel quality is poor, the LP-WUS cannot be detected on the secondary link, and the terminal apparatus works on the secondary link for a long time. If the network apparatus has a service for which the terminal apparatus is to be scheduled, but the terminal apparatus still works on the secondary link, the terminal apparatus cannot receive, in time, the scheduling information sent by the network apparatus, generating an unnecessary service delay.

In view of this, an embodiment of this application provides a communication method. The method may be applied to the communication system shown in FIG. 1. In the communication method provided in this embodiment of this application, a terminal apparatus monitors an LP-WUS from a network apparatus on a first link. The terminal apparatus monitors a PDCCH from the network apparatus on a second link under a first condition. The first condition includes at least one of the following: a first moment arrives, where the first moment is one of periodic moments; or no LP-WUS is detected on the first link within first duration. Power consumption of the first link is less than power consumption of the second link.

That is, when the terminal apparatus monitors the LP-WUS on the first link, the terminal apparatus periodically performs link switching, for example, when a moment in the periodic moments arrives, for example, when the first moment arrives, the terminal apparatus switches to the second link, and monitors the PDCCH on the second link, so that occurrence of the terminal apparatus staying on the first link for a long time is reduced, enabling the terminal apparatus to receive scheduling information of the network apparatus in a timely manner, and helping reduce a service delay.

Alternatively, when the terminal apparatus monitors the LP-WUS on the first link, if duration in which no LP-WUS is detected reaches specific duration, for example, the first duration, the terminal apparatus switches to the second link, and monitors the PDCCH on the second link, so that occurrence of the terminal apparatus staying on the first link for a long time is reduced, enabling the terminal apparatus to receive scheduling information of the network apparatus in a timely manner, helping reduce a service delay, and ensuring a normal service receiving behavior on the terminal apparatus side.

It should be understood that names of messages between devices, names of parameters in the messages, or the like in the following embodiments of this application are merely examples, and there may alternatively be other names during specific implementation. This is not specifically limited in embodiments of this application.

With reference to FIG. 8 to FIG. 12, the following describes in detail communication methods according to embodiments of this application. A communication method 800 according to an embodiment of this application includes the following steps.

S801: A network apparatus sends an LP-WUS to a terminal apparatus. Correspondingly, the terminal apparatus monitors the LP-WUS from the network apparatus on a first link.

For example, the network apparatus is described as follows.

The network apparatus may be a network device, or may be a component used in the network device, for example, a processor, a chip, or a chip system, or may be a logical module or software that can implement all or some functions of the network device. This is not limited in this embodiment of this application. For the network device, refer to the description in FIG. 1. Details are not described again.

For example, the terminal apparatus is described as follows.

The terminal apparatus may be a terminal device, or may be a component used in the terminal device, for example, a processor, a chip, or a chip system, or may be a logical module or software that can implement all or some functions of the terminal device. This is not limited in this embodiment of this application. For the terminal device, refer to the description in FIG. 1. Details are not described again.

In the communication method 800 of this application, the terminal apparatus may be in an RRC connected state, or may be in an RRC idle state. This is not limited in this embodiment of this application.

For example, the first link is described as follows.

The first link may be a secondary link. For details, refer to the description in FIG. 2 or FIG. 3. That is, the terminal apparatus monitors the LP-WUS from the network apparatus on the secondary link.

It should be noted that in this embodiment of this application, when the first link is in a working state, a second link stops working. For example, when monitoring the LP-WUS from the network apparatus on the first link, the terminal apparatus stops PDCCH monitoring on the second link. The second link may be a primary link. For details, refer to the description in FIG. 2 or FIG. 3.

For the terminal apparatus, by performing S801, the terminal apparatus may detect the LP-WUS, or may detect no LP-WUS. When the LP-WUS is detected, the terminal apparatus monitors the PDCCH from the network apparatus on the second link. For details, refer to the descriptions of related technologies. Details are not described again. If no LP-WUS is detected, perform S802.

S802: The terminal apparatus monitors the PDCCH from the network apparatus on the second link under a first condition.

The second link is described as follows: The second link may be a primary link. For details, refer to the description in FIG. 2 or FIG. 3. That is, the terminal apparatus monitors the PDCCH from the network apparatus on the primary link.

It should be noted that, in this embodiment of this application, power consumption of the first link is less than power consumption of the second link. An example in which the first link is a secondary link and the second link is a primary link is used for description. This should not be construed as a limitation on this application.

The first condition includes at least one of the following:

Condition 1: A first moment arrives.

The first moment is one of periodic moments. For example, a reference point is set to 0 ms, and an interval between periodic moments is 5 ms. In this case, the periodic moments include the 0^{th} ms, 5^{th} ms, 10^{th} ms, 15^{th} ms, 20^{th} ms, ..., 100^{th} ms, and the like. The first moment may be one of the foregoing moments, for example, the 5^{th} ms.

In Condition 1, the periodic moments may be configured by the network apparatus, or may be predefined. This is not limited in this application.

Alternatively, in Condition 1, a periodicity length corresponding to the periodic moments may be configured by the network apparatus, or may be predefined. This is not limited in this embodiment of this application.

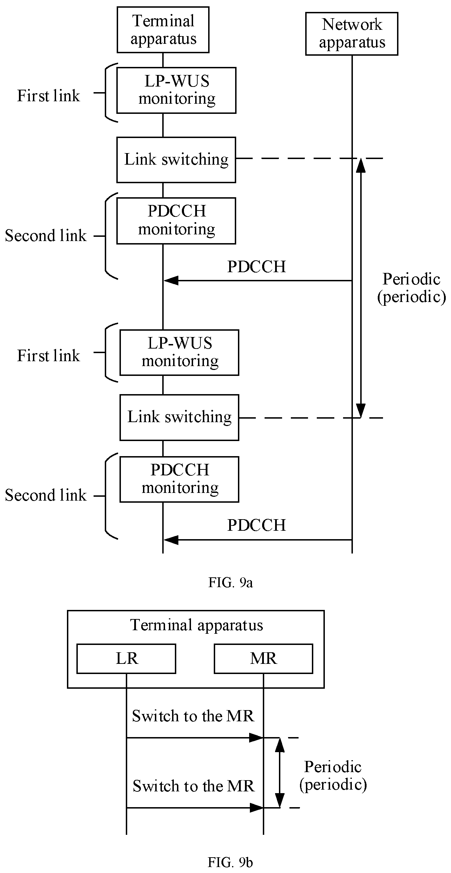

Under Condition 1, it may be understood that the terminal apparatus serves as a behavior initiator, and the terminal apparatus periodically monitors the PDCCH from the network apparatus on the second link according to the periodic moments, as shown in FIG. 9a or FIG. 9b.

It is easy to understand that, in this application, the network apparatus sends the PDCCH to the terminal apparatus. Moments for sending the PDCCH may include the first moment.

Condition 2: No LP-WUS is detected on the first link within first duration.

In Condition 2, the first duration may be configured by the network apparatus, or may be predefined. This is not limited in this embodiment of this application.

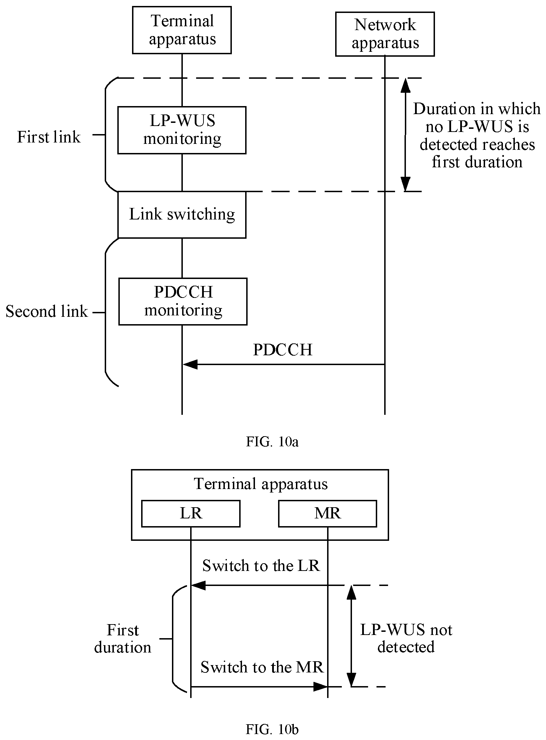

Under Condition 2, it may be understood that, if duration in which the terminal apparatus detects no LP-WUS reaches the first duration, the terminal apparatus monitors the PDCCH from the network apparatus on the second link, as shown in FIG. 10a or FIG. 10b.

It is easy to understand that, in this application, the first condition includes at least one of Condition 1 and Condition 2. That the terminal apparatus monitors the PDCCH from the network apparatus on the second link under the first condition may be understood as: The terminal apparatus monitors the PDCCH from the network apparatus on the second link under Condition 1; and/or the terminal apparatus monitors the PDCCH from the network apparatus on the second link under Condition 2.

In Condition 2, in a possible implementation, the terminal apparatus serves as a behavior initiator, that is, the terminal apparatus determines that the duration in which no LP-WUS is detected reaches the first duration, and autonomously switches from the first link to the second link, to monitor the PDCCH on the second link.

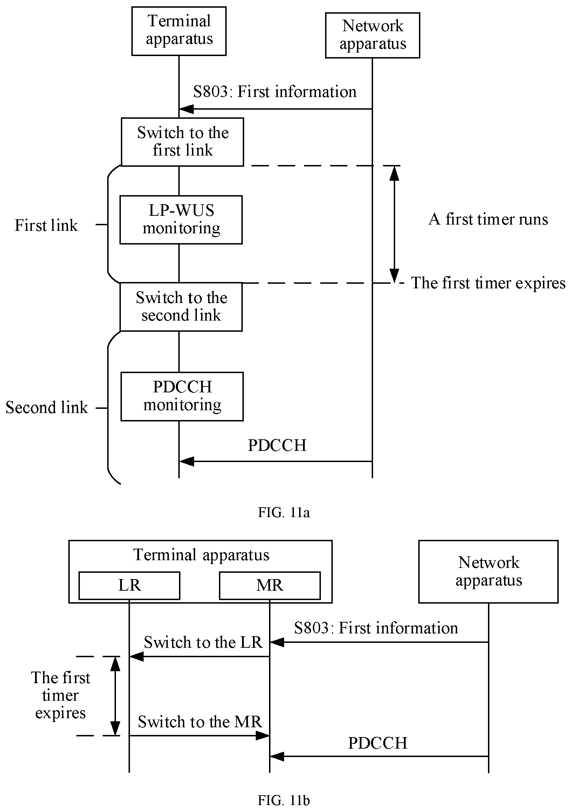

In Condition 2, in another possible implementation, the network apparatus serves as a behavior initiator, as shown in FIG. 11a or FIG. 11b, that is, the network apparatus further performs S803.

S803: The network apparatus sends first information to the terminal apparatus. Correspondingly, the terminal apparatus receives the first information from the network apparatus.

In a possible example, the terminal apparatus receives the first information from the network apparatus on the second link.

The first information indicates to start a first timer.

For example, the first timer may be denoted as an LP-WUS working mode timer (LP-WUS mode timer). Certainly, the first timer may have another name. This is not limited in this embodiment of this application.

It is easy to understand that, for the terminal apparatus, after receiving the first information, the terminal apparatus starts the first timer in response to the first information.

When the terminal apparatus performs S803, S801 includes: The terminal apparatus monitors the LP-WUS from the network apparatus on the first link during running of the first timer.

It may be understood that the terminal apparatus keeps monitoring the LP-WUS from the network apparatus on the first link during running of the first timer.

When the terminal apparatus performs S803, S802 includes: The terminal apparatus monitors the PDCCH from the network apparatus on the second link when the first timer expires.

Running duration of the first timer is the first duration.

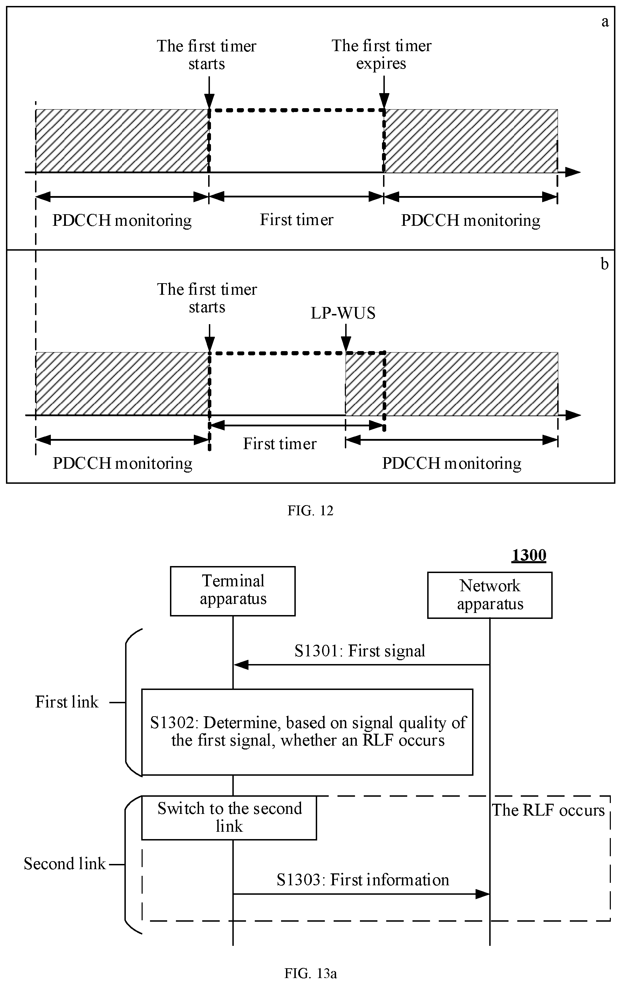

It may be understood that if the terminal apparatus keeps monitoring the LP-WUS from the network apparatus on the first link, and the terminal apparatus detects no LP-WUS till the first timer expires, the terminal apparatus switches from the first link to the second link, and monitors the PDCCH from the network apparatus on the second link, as shown in a block in which the letter a is located in FIG. 12.

It is easy to understand that the terminal apparatus keeps monitoring the LP-WUS from the network apparatus on the first link. If the terminal apparatus detects the LP-WUS during running of the first timer, the terminal apparatus switches from the first link to the second link, and monitors the PDCCH from the network apparatus on the second link, as shown in a block in which the letter b is located in FIG. 12. For details, refer to descriptions of related technologies. Details are not described again.

### Technical problem 2

Currently, in an RLF determining mechanism, a terminal apparatus in a connected state needs to frequently perform RLF determining, for example, periodically perform RLF determining. Further, if the terminal apparatus is a terminal apparatus configured with LP-WUS, the terminal apparatus needs to frequently wake up a primary link, and perform RLF determining on the primary link, causing high power consumption.

In view of this, an embodiment of this application provides a communication method. The method may be applied to the communication system shown in FIG. 1. In the communication method provided in this embodiment of this application, a terminal apparatus receives a first signal from a network apparatus on a first link, and determines, based on signal quality of the first signal, that an RLF occurs. The terminal apparatus sends first information to the network apparatus on a second link, where the first information indicates that the RLF occurs, and power consumption of the first link is less than power consumption of the second link.

That is, the terminal apparatus determines, based on the signal quality of the first signal received on the first link, whether the RLF occurs, enables the second link only when the RLF occurs, and reports, to the network apparatus on the second link, that the RLF occurs. On the contrary, if no RLF occurs, the second link does not need to be enabled, reducing frequency of enabling the second link. Because the power consumption of the first link is less than the power consumption of the second link, compared with enabling the second link frequently and determining, based on signal quality of a signal received on the second link, whether the RLF occurs, in this application, the first signal is received on the first link having lower power consumption, and whether the RLF occurs is determined based on the signal quality of the first signal, reducing power consumption.

It should be understood that names of messages between devices, names of parameters in the messages, or the like in the following embodiments of this application are merely examples, and there may alternatively be other names during specific implementation. This is not specifically limited in embodiments of this application.

With reference to FIG. 13a to FIG. 15b, the following describes in detail communication methods according to embodiments of this application. A communication method 1300 according to an embodiment of this application includes the following steps.

S1301: A network apparatus sends a signal to a terminal apparatus. Correspondingly, the terminal apparatus receives the signal from the network apparatus.

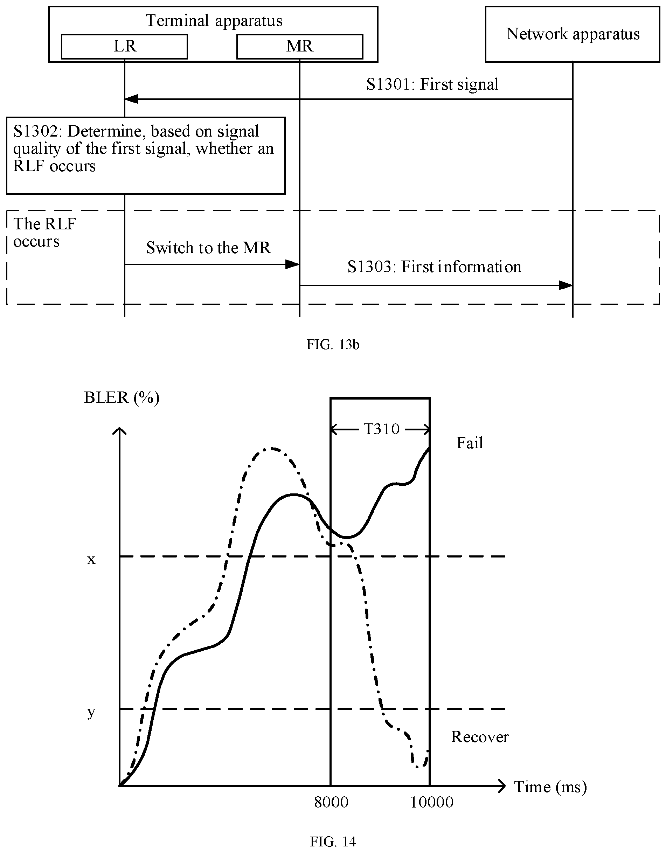

For example, the terminal apparatus receives the signal from the network apparatus on a first link. The signal received on the first link is denoted as a first signal, as shown in FIG. 13a or FIG. 13b.

For example, for the network apparatus, refer to the description of S801. Details are not described again.

For example, for the terminal apparatus and the first link, refer to the description of S801. Details are not described again.

In the communication method 1300 in this application, the terminal apparatus may be in an RRC connected state.

For example, the first signal may be used to determine radio channel quality. For example, the first signal includes at least one of the following: a low-power channel state information reference signal (low power channel state information reference signal, LP-CSI-RS), a low-power reference signal (low power reference signal, LP-RS), a channel state information reference signal (channel state information reference signal, CSI-RS), a reference signal (reference signal, RS), or a synchronization signal. The synchronization signal may be an SSB. Certainly, the first signal may alternatively be another signal. The first signal is not limited in this embodiment of this application.

It should be noted that in this embodiment of this application, when the first link is in a working state, a second link stops working. For example, when the terminal apparatus receives the first signal from the network apparatus on the first link, the second link stops working, for example, PDCCH monitoring is stopped.

For the terminal apparatus, after receiving the first signal, the terminal apparatus performs S1302.

S1302: The terminal apparatus determines, based on signal quality of the first signal, whether an RLF occurs.

For example, the signal quality of the first signal may include at least one of the following: reference signal received power (reference signal received power, RSRP) of the first signal, a received signal strength indicator (received signal strength indicator, RSSI) of the first signal, or reference signal received quality (reference signal received quality, RSRQ) of the first signal.

For example, the signal quality of the first signal includes signal quality of a part of signals in the first signal. The part of signals of the first signal includes at least one of the following: an LP-CSI-RS, an LP-RS, and the like. It may be understood that the terminal apparatus determines, based on the signal quality of the part of signals in the first signal, whether the RLF occurs.

For example, an implementation process of S1302 includes: The terminal apparatus determines, based on the signal quality of the first signal and a first threshold, whether the RLF occurs.

FIG. 14 is used as an example. The signal quality of the first signal is mapped to a hypothetical PDCCH block error rate (PDCCH BLER), which is compared with the first threshold. The first threshold includes Q1 and Q2, where Q1 corresponds to an x% BLER of hypothetical PDCCH transmission, Q2 corresponds to a y% BLER of hypothetical PDCCH transmission, x>0, and y>0, as shown in FIG. 14.

In FIG. 14, when the terminal apparatus consecutively receives Q1 of a specific quantity (that is, the signal quality of the first signal exceeds PDCCH BLER x%), the terminal apparatus starts a timer T310. If the terminal apparatus does not consecutively receive Q2 of a specific quantity till the timer T310 expires (that is, the signal quality of the first signal is lower than PDCCH BLER y%), it means that the RLF occurs, as shown by the solid curve in FIG. 14. On the contrary, if the terminal apparatus consecutively receives Q2 of a specific quantity during running of the timer T310 (that is, the signal quality of the first signal is lower than PDCCH BLER y%), radio link quality is recovered (recover), and no RLF occurs, as shown by the dashed curve in FIG. 14.

In this embodiment of this application, the first threshold may be predefined, or may be configured by the network apparatus. For example, before the terminal apparatus performs S 1302, the following operation is further performed: The network apparatus sends first information to the terminal apparatus. Correspondingly, the terminal apparatus receives the first information from the network apparatus.

In a possible example, the terminal apparatus receives the first information from the network apparatus on the second link.

The first information is used to determine the first threshold.

For example, the first information includes the first threshold. For example, the first information includes a threshold Q1 (for example, the foregoing x% BLER) and a threshold Q2 (for example, the foregoing y% BLER).

For another example, the first information includes a first offset (offset). The first offset is an offset between the first threshold and a second threshold, and the second threshold is used by the terminal apparatus to determine, based on signal quality of a second signal, whether the RLF occurs. In this case, the terminal apparatus may determine the second threshold based on the first threshold and the first offset.

FIG. 14 is used as an example. The second threshold includes a threshold Qout (for example, the foregoing 10% BLER) and a threshold Qin (for example, the foregoing 2% BLER). The first offset is a. Correspondingly, the threshold Q1 in the first threshold may be understood as: x% = (10±a)%. The threshold Q2 in the first threshold may be understood as: y% = (2±a)%.

For example, the first information is carried in an RRC message, or the first information is carried in another message. This is not limited in embodiments of this application.

It should be noted that in this application, the first threshold and the second threshold are different thresholds. The first threshold is used to determine whether the RLF occurs on the first link. The second threshold is used to determine whether the RLF occurs on the second link. Because measurement capabilities on the first link and the second link are different, whether the RLF occurs is determined based on different thresholds for the first link and the second link. In a possible example, in this application, a new threshold, namely, the first threshold, suitable for determining whether the RLF occurs on the first link (that is, a secondary link) is directly introduced. For details, refer to the description of "the first information includes the first threshold". Details are not described again. In a possible example, the first offset is introduced in this application, so that a measurement result on the first link (that is, a secondary link) is equivalently mapped to a measurement result on the second link (that is, a primary link). For details, refer to the description of "the first information includes a first offset". Details are not described again.

For the terminal apparatus, when the RLF occurs, the terminal apparatus performs S1303. On the contrary, when no RLF occurs, the terminal apparatus does not perform S1303, and may continue to monitor the first signal from the network apparatus on the first link. S1303 is described as follows:

S1303: The terminal apparatus sends first information to the network apparatus on the second link. Correspondingly, the network apparatus receives the first information from the terminal apparatus.

The first information indicates that the RLF occurs. It may be understood that the terminal apparatus reports, to the network apparatus on the second link, that the RLF occurs, so that the network apparatus is aware of radio channel quality in a timely manner, effectively reducing a waste of resources caused by repeatedly sending scheduling information by the network apparatus because the network apparatus is unaware of poor radio channel quality.

The second link is described as follows: The second link may be a primary link. For details, refer to the description in FIG. 2 or FIG. 3. In other words, the terminal apparatus sends the first information to the network apparatus on the primary link.

It should be noted that, in this embodiment of this application, power consumption of the first link is less than power consumption of the second link. An example in which the first link is a secondary link and the second link is a primary link is used for description. This should not be construed as a limitation on this application.

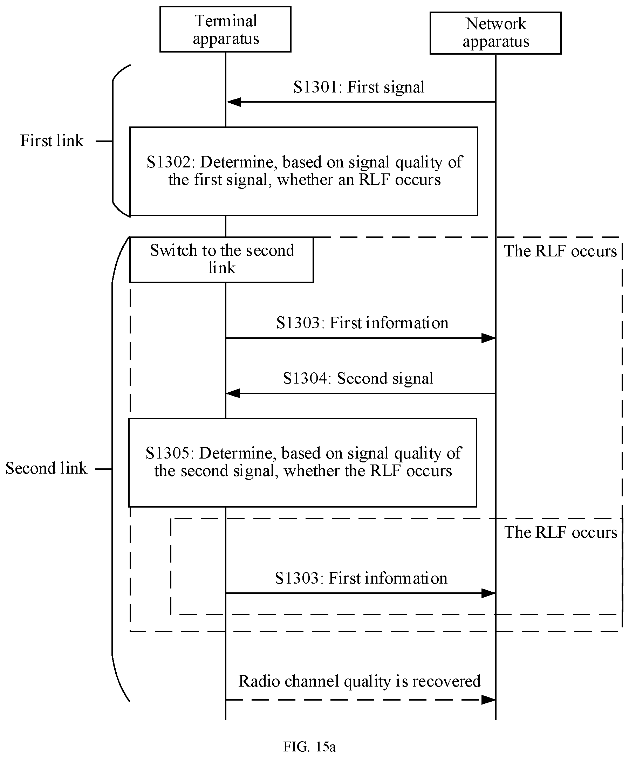

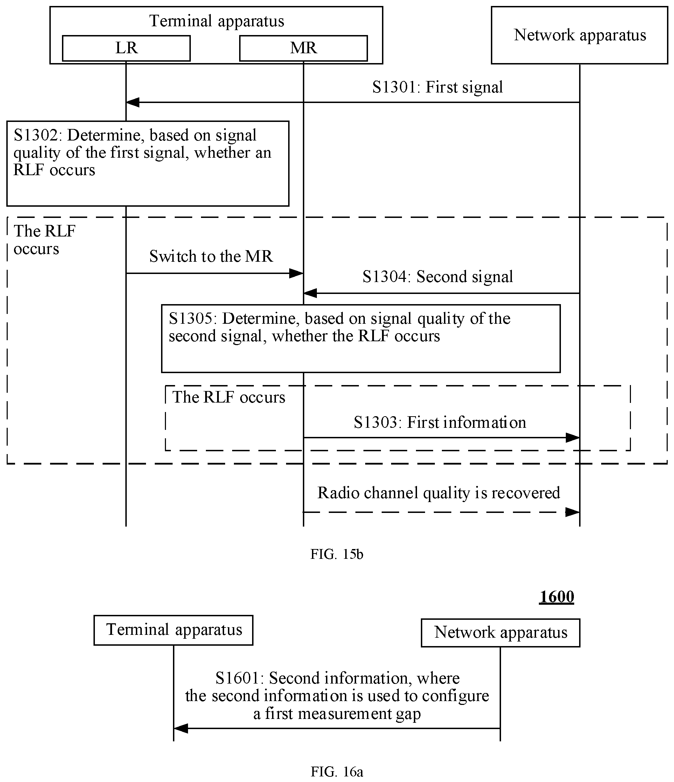

In some embodiments, as shown in FIG. 15a or FIG. 15b, the terminal apparatus performs S1302, and after determining that the RLF occurs and before performing S1303, the terminal apparatus further performs the following operation.

S1304: The network apparatus sends a signal to the terminal apparatus. Correspondingly, the terminal apparatus receives the signal from the network apparatus.

For example, the terminal apparatus receives the signal from the network apparatus on the second link. The signal received on the second link is denoted as a second signal, as shown in FIG. 15a or FIG. 15b.

For example, the second signal may be used to determine radio channel quality. For example, the second signal includes at least one of the following: an LP-CSI-RS, an LP-RS, a CSI-RS, an RS, or a synchronization signal. The synchronization signal may be an SSB. Certainly, the second signal may alternatively be another signal. The second signal is not limited in this embodiment of this application.

S1305: The terminal apparatus determines, based on signal quality of the second signal, whether the RLF occurs.

For example, the signal quality of the second signal may include at least one of the following: RSRP of the second signal, an RSSI of the second signal, or RSRQ of the second signal.

For example, the signal quality of the second signal includes signal quality of a part of signals in the second signal. The part of signals of the second signal includes at least one of the following: a CSI-RS, an RS, a synchronization signal, or the like. It may be understood that the terminal apparatus determines, based on the signal quality of the part of signals in the second signal, whether the RLF occurs.

For example, the terminal apparatus determines, based on the signal quality of the second signal and the second threshold, whether the RLF occurs.

FIG. 4 is used as an example. The signal quality of the second signal is mapped to the hypothetical PDCCH block error rate (PDCCH BLER), which is compared with the second threshold. The second threshold includes Qout and Qin, where Qout corresponds to a 10% BLER of hypothetical PDCCH transmission, and Qin corresponds to a 2% BLER of hypothetical PDCCH transmission.

In FIG. 4, when the terminal apparatus consecutively receives Qout of a specific quantity (that is, the signal quality of the second signal exceeds PDCCH BLER 10%), the terminal apparatus starts a timer T310. If the terminal apparatus does not consecutively receive Qin of a specific quantity till the timer T310 expires (that is, the signal quality of the second signal is lower than PDCCH BLER 2%), it means that the RLF occurs, as shown by the solid curve in FIG. 4. On the contrary, if the terminal apparatus consecutively receives Qin of a specific quantity during running of the timer T310 (that is, the signal quality of the second signal is lower than PDCCH BLER 2%), radio link quality is recovered (recover), and no RLF occurs, as shown by the dashed curve in FIG. 4.

For the terminal apparatus, if it is still determined, by performing S1305, that the RLF occurs, the terminal apparatus performs S1303. On the contrary, if it is determined, by performing S1305, that no RLF occurs, the terminal apparatus does not perform S1303, reducing false positives.

In some embodiments, after receiving the first information, the network apparatus performs an RRC re-establishment process based on the first information, to recover radio channel quality. Optionally, when the radio channel quality is recovered to normal, the terminal apparatus sends information to the network device, to indicate that the radio channel quality is recovered, so that the network apparatus can be aware of radio channel status in time.

### Technical problem 3

Currently, a primary link and a secondary link of a terminal apparatus may share some hardware, and correspondingly, the primary link and the secondary link may not work simultaneously. In this case, how to flexibly configure measurement time of the primary link and the secondary link is an urgent problem to be resolved.

In view of this, an embodiment of this application provides a communication method. The method may be applied to the communication system shown in FIG. 1. In the communication method provided in this embodiment of this application, a terminal apparatus receives second information from a network apparatus. The second information is used to configure a first measurement gap, the first measurement gap indicates a time period in which a second link is in a disabled state, and the first measurement gap includes a time period in which a first signal is monitored on a first link.

In other words, this embodiment of this application provides a manner of configuring the first measurement gap. In a time period corresponding to the first measurement gap, the first link of the terminal apparatus is enabled, and the second link is disabled. Therefore, in a scenario in which the first link and the second link cannot work simultaneously, the time period in which the second link is disabled covers the time period in which the first link is enabled to perform measurement, so that measurement time of the first link and the second link is flexibly and properly configured.

It should be understood that names of messages between devices, names of parameters in the messages, or the like in the following embodiments of this application are merely examples, and there may alternatively be other names during specific implementation. This is not specifically limited in embodiments of this application.

With reference to FIG. 16a, the following describes in detail a communication method according to an embodiment of this application. A communication method 1600 according to an embodiment of this application includes the following steps.

S1601: A network apparatus sends second information to a terminal apparatus. Correspondingly, the terminal apparatus receives the second information from the network apparatus.

For example, for the network apparatus and the terminal apparatus, refer to the description of S801. Details are not described again.

In the communication method 1600 in this application, the terminal apparatus may be in an RRC connected state.

In a possible example, the terminal apparatus receives the second information from the network apparatus on a second link.

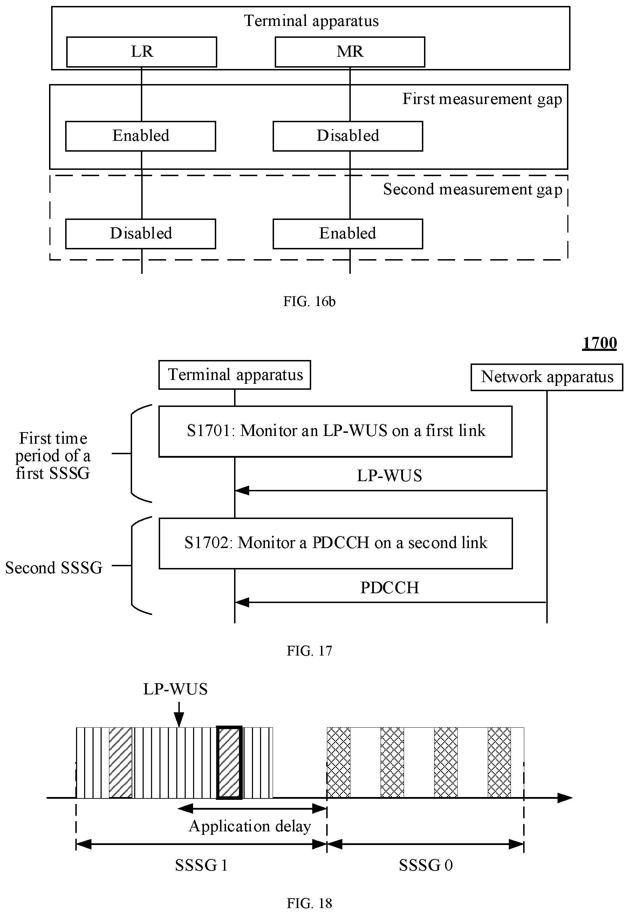

The second information is used to configure a first measurement gap. The first measurement gap indicates a time period in which the second link is in a disabled state, and the first measurement gap includes a time period in which a first signal is monitored on a first link, as shown in FIG. 16b. It may be understood that the first measurement gap covers the time period in which the first signal is monitored on the first link.

For example, for the first link, refer to the description of S801, and for the second link, refer to the description of S802. Details are not described again.

For example, the first measurement gap includes the 5^{th} subframe to the 8^{th} subframe in each radio frame.

For example, the second information includes the following parameters: gapOffset, mgl, mgrp, mgta, and the like. For details, refer to descriptions of measurement configuration information delivery. A new value is added to the parameters, so that the network apparatus configures the first measurement gap for the terminal apparatus.

It is easy to understand that the first measurement gap may include one or more time periods. Each time period in the first measurement gap may be a time period in which the first signal is monitored on the first link, and is a time period in which the second link is in a disabled state.

It is easy to understand that, in embodiments of this application, the first measurement gap may have another name, for example, a first window or a first interval. In embodiments of this application, the first measurement gap is used as an example for description, which should not be construed as a limitation on embodiments of this application.

It is easy to understand that the first signal may include at least one of the following: an LP-CSI-RS, an LP-RS, a CSI-RS, an RS, a synchronization signal, or the like. For details, refer to the description of S1301. Details are not described again. In some embodiments, the first signal may be used for radio link monitoring (radio link monitoring, RLM)/radio resource management (radio resource management, RRM) measurement. For details, refer to the description of S1302. Details are not described again. In some other embodiments, the first signal may be used for other measurement, such as cell selection or cell reselection. A purpose of the first signal is not limited in embodiments of this application.

For example, the second information is carried in an RRC message, or the second information is carried in another message. This is not limited in embodiments of this application.

For example, different measurement gaps correspond to different identifiers. In a possible implementation, the second information includes a first identifier, and the first identifier is used to identify the first measurement gap. For example, the first identifier is MeasGapId corresponding to the first measurement gap. In this case, the network apparatus configures the first measurement gap for the terminal apparatus by using the first identifier. Correspondingly, the terminal apparatus may determine, based on the received first identifier, that the measurement gap configured by the network apparatus is the first measurement gap.

In some embodiments, the second information is further used to configure a second measurement gap. The second measurement gap indicates a time period in which the first link is in a disabled state, and the second measurement gap includes a time period in which a second signal is monitored on the second link, as shown in FIG. 16b. It may be understood that the second measurement gap covers the time period in which the second signal is monitored on the second link. In other words, in this application, in a scenario in which the first link and the second link cannot work simultaneously, the time period in which the first link is disabled covers the time period in which the second link is enabled to perform measurement, so that measurement time of the first link and the second link is flexibly and properly configured.

For example, the second measurement gap includes the 1^{st} subframe to the 4^{th} subframe in each radio frame.

It is easy to understand that the second measurement gap may include one or more time periods. Each time period in the second measurement gap may be a time period in which the second signal is monitored on the second link, and is a time period in which the first link is in a disabled state.

It is easy to understand that, in embodiments of this application, the second measurement gap may have another name, for example, a second window or a second interval. In embodiments of this application, the second measurement gap is used as an example for description, which should not be construed as a limitation on embodiments of this application.

For example, different measurement gaps correspond to different identifiers. In a possible implementation, the second information includes a second identifier, and the second identifier is used to identify the second measurement gap. For example, the second identifier is MeasGapId corresponding to the second measurement gap. In this case, the network apparatus configures the second measurement gap for the terminal apparatus by using the second identifier. Correspondingly, the terminal apparatus may determine, based on the received second identifier, that the measurement gap configured by the network apparatus is the second measurement gap.

In some embodiments, the second information is further used to indicate a first-type terminal apparatus. The measurement gap configured by using the second information is configured by the network apparatus for the first-type terminal apparatus, and the first-type terminal apparatus includes the foregoing terminal apparatus.

For example, the first-type terminal apparatus may be a terminal apparatus configured with LP-WUS.

For example, the second information may include a measurement gap identifier information element (MeasGapId information element), and the MeasGapId information element may reuse MeasGapId-r17, with a new indication bit being added. Alternatively, the second information may include new indication information, for example, MeasGapId-r18 or MeasGapId-LPWUS. This is not limited in embodiments of this application.

That is, measurement gaps configured for different types of terminal apparatuses are different. For example, for a terminal apparatus configured with LP-WUS, that is, the first-type terminal apparatus, the network apparatus may configure the first measurement gap and/or the second measurement gap. On the contrary, for a terminal apparatus without the foregoing LP-WUS configuration, the network apparatus does not need to configure the foregoing measurement gap.

### Technical problem 4

Currently, how to use an LP-WUS mechanism and an SSSG technology in combination is not provided in related technologies. Therefore, considering a service requirement and reducing power consumption cannot be balanced.

In view of this, an embodiment of this application provides a communication method. The method may be applied to the communication system shown in FIG. 1. In the communication method provided in this embodiment of this application, a terminal apparatus monitors an LP-WUS from a network apparatus on a first link in a first time period of a first SSSG, and the first time period is a time period in which a PDCCH is not monitored on a second link. If the terminal apparatus detects the LP-WUS, the terminal apparatus monitors the PDCCH from the network apparatus in a second SSSG on the second link. Power consumption of the first link is less than power consumption of the second link.

That is, the terminal apparatus monitors the LP-WUS on the first link in a time period in which the PDCCH is not monitored in the first SSSG (that is, the first time period). If the LP-WUS is detected, it means that the network apparatus most likely has a service for which the terminal apparatus is to be scheduled. Correspondingly, the terminal apparatus performs SSSG switching, to monitor the PDCCH in an SSSG after the switching, and does not need to perform SSSG switching after the PDCCH is detected on a fixed PDCCH monitoring occasion. In other words, this application provides a manner of triggering SSSG switching, to improve SSSG switching flexibility, help meet a service requirement, and reduce a service delay.

For example, in some scenarios, for example, the PDCCH monitoring occasion is after the LP-WUS, according to related technologies, the terminal apparatus needs to monitor the PDCCH on the PDCCH monitoring occasion after the LP-WUS, and performs SSSG switching only after detecting the PDCCH. However, in this application, the terminal apparatus can perform SSSG switching after detecting the LP-WUS. Therefore, in this application, the terminal apparatus can perform SSSG switching as early as possible, and perform a service on an SSSG after the switching, to meet a service transmission requirement and reduce a service delay while saving energy.

It should be understood that names of messages between devices, names of parameters in the messages, or the like in the following embodiments of this application are merely examples, and there may alternatively be other names during specific implementation. This is not specifically limited in embodiments of this application.

With reference to FIG. 17 to FIG. 18, the following describes in detail a communication method according to an embodiment of this application. A communication method 1700 according to an embodiment of this application includes the following steps.

S1701: A network apparatus sends an LP-WUS to a terminal apparatus in a first time period of a first SSSG. Correspondingly, the terminal apparatus monitors the LP-WUS from the network apparatus on a first link in the first time period of the first SSSG.

For example, for the network apparatus and the terminal apparatus, refer to the description of S801. Details are not described again.

In the communication method 1700 in this application, the terminal apparatus may be in an RRC connected state.

For example, the first link may be a secondary link. For details, refer to the description of S801. Details are not described again.

For example, a second link may be a primary link, and power consumption of the first link is less than power consumption of the second link. For details, refer to the description of S802. Details are not described again.

The first time period is described as follows:
For the terminal apparatus, the first time period is a time period in which a PDCCH is not monitored on the second link.

In this application, the first time period may include one or more time periods, for example, a time period other than a PDCCH monitoring occasion in the first SSSG.

FIG. 18 is used as an example. The first SSSG is an SSSG 1. In the SSSG 1, a time period in which the terminal apparatus monitors the PDCCH is shown in a block filled with slashes. In the SSSG 1, a time period in which the terminal apparatus monitors the LP-WUS belongs to the first time period, as shown in a block filled with vertical lines.

For the terminal apparatus, if the terminal apparatus detects no LP-WUS, the terminal apparatus may continue to monitor the LP-WUS in a time period in which the PDCCH does not need to be monitored in the first SSSG. On the contrary, if the terminal apparatus detects the LP-WUS, the terminal apparatus performs S1702.

S1702: The network apparatus sends the PDCCH to the terminal apparatus. Correspondingly, the terminal apparatus monitors the PDCCH from the network apparatus in a second SSSG on the second link.

It may be understood that the terminal apparatus is implicitly indicated, by using the detected LP-WUS, to perform SSSG switching.

FIG. 18 is used as an example. The first SSSG is the SSSG 1, and the second SSSG is an SSSG 0. In the first time period of the SSSG 1, if the terminal apparatus detects the LP-WUS, the terminal apparatus switches from the SSSG 1 to the SSSG 0. In the SSSG 0, the terminal apparatus monitors the PDCCH. A PDCCH monitoring occasion of the SSSG 0 is shown in a block filled with grid lines.

Optionally, a PDCCH monitoring periodicity in the first SSSG is greater than a PDCCH monitoring periodicity in the second SSSG.

FIG. 18 is used as an example. The first SSSG is the SSSG 1, and the second SSSG is the SSSG 0. In the SSSG 1, a PDCCH monitoring occasion is shown in a block filled with slashes. In the SSSG 0, a PDCCH monitoring occasion is shown in a block filled with grid lines.

In other words, PDCCH monitoring occasions in the first SSSG are relatively sparse, and PDCCH monitoring occasions in the second SSSG are relatively dense. As the network apparatus most likely has a service for which the terminal apparatus is to be scheduled, the terminal apparatus works in the second SSSG having denser PDCCH monitoring occasions, helping the terminal apparatus with successful PDCCH detection, and reducing a service delay.

Optionally, a moment at which the terminal apparatus switches from the first SSSG to the second SSSG is determined based on a moment at which the LP-WUS is detected. For example, when detecting the LP-WUS, the terminal apparatus performs SSSG switching, and switches from the first SSSG to the second SSSG after an application delay (application delay).

FIG. 18 is used as an example. In the SSSG 1, the terminal apparatus may perform SSSG switching right after detecting the LP-WUS, without waiting to perform SSSG switching after the PDCCH is monitored on the PDCCH monitoring occasion of the bold line block filled with slashes, helping reduce a service delay.

In some embodiments, as a possible alternative, the terminal apparatus performs S1701, that is, monitors the LP-WUS from the network apparatus on the first link in the first time period of the first SSSG. If the terminal apparatus detects the LP-WUS, the terminal apparatus does not perform SSSG switching, but stops the SSSG, and resumes a normal PDCCH monitoring behavior. It may be understood that, if the terminal apparatus detects the LP-WUS, the terminal apparatus steps out of the SSSG technology, and may keep monitoring the PDCCH, helping successfully detect scheduling information of the network apparatus.

An embodiment of this application further provides another communication method. The method may be applied to the communication system shown in FIG. 1. In the communication method provided in this embodiment of this application, a terminal apparatus monitors a PDCCH from a network apparatus in a third SSSG on a second link, where the third SSSG is one of at least two preconfigured SSSGs. The terminal apparatus monitors an LP-WUS from the network apparatus on a first link under a second condition. The second condition includes at least one of the following: duration of PDCCH monitoring in the third SSSG reaches first duration; or indication information from the network apparatus is received, where the indication information includes an SSSG index, and the SSSG index indicates to monitor the LP-WUS on the first link. Power consumption of the first link is less than power consumption of the second link.

That is, when the terminal apparatus monitors the PDCCH in the third SSSG on the second link, if duration of PDCCH monitoring reaches specific duration, for example, the first duration, the terminal apparatus switches to the first link, and monitors the LP-WUS on the first link. Because the terminal apparatus has most likely completed a service within the first duration, the terminal apparatus may enter an LP-WUS working mode, to save power consumption while considering a service requirement.

Alternatively, when the terminal apparatus monitors the PDCCH in the third SSSG on the second link, if the terminal apparatus receives indication information of the network apparatus, and the indication information includes an SSSG index, where the SSSG index indicates that the terminal apparatus may switch to the first link and monitor the LP-WUS on the first link, the terminal apparatus may enter an LP-WUS working mode based on the indication information, to save power consumption while considering a service requirement.

It should be understood that names of messages between devices, names of parameters in the messages, or the like in the following embodiments of this application are merely examples, and there may alternatively be other names during specific implementation. This is not specifically limited in embodiments of this application.

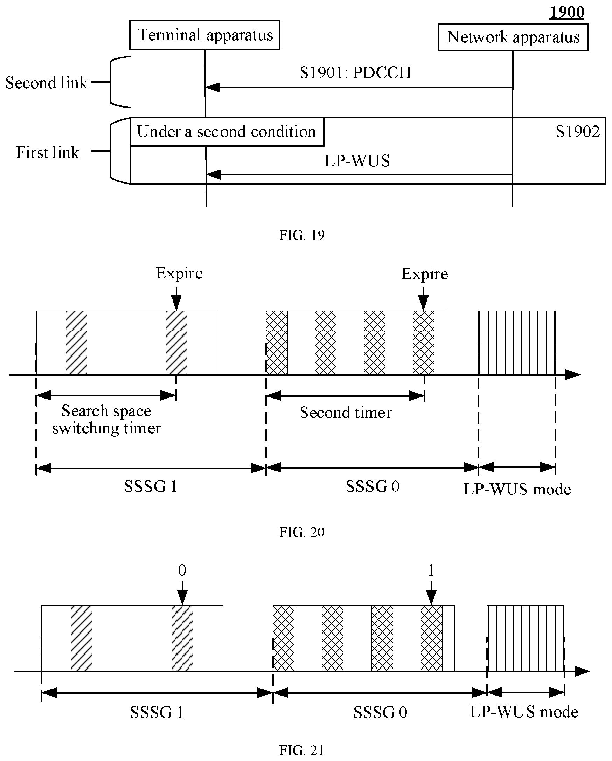

With reference to FIG. 19 to FIG. 22b, the following describes in detail a communication method according to an embodiment of this application. A communication method 1900 according to an embodiment of this application includes the following steps.

S1901: A network apparatus sends a PDCCH to a terminal apparatus. Correspondingly, the terminal apparatus monitors the PDCCH from the network apparatus in a third SSSG on a second link.

The third SSSG is one of at least two preconfigured SSSGs.

For example, for the network apparatus and the terminal apparatus, refer to the description of S801. Details are not described again.

In the communication method 1900 in this application, the terminal apparatus may be in an RRC connected state.

For example, the second link may be a primary link. For details, refer to the description of S802. Details are not described again.

FIG. 20, FIG. 21, FIG. 22a, or FIG. 22b is used as an example. The third SSSG is an SSSG 0. In the SSSG 0, a PDCCH monitoring occasion is shown in a block filled with grid lines. The terminal apparatus monitors the PDCCH on a resource corresponding to a block filled with grid lines.

S1902: The network apparatus sends an LP-WUS to the terminal apparatus. Correspondingly, the terminal apparatus monitors the LP-WUS from the network apparatus on a first link under a second condition.

For example, the first link may be a secondary link, and power consumption of the first link is less than power consumption of the second link. For details, refer to the description of S801. Details are not described again.

The second condition includes at least one of the following:
Condition 3: Duration of PDCCH monitoring in the third SSSG reaches first duration.

In Condition 3, if duration in which the terminal apparatus monitors the PDCCH in the third SSSG reaches the first duration, a service has most likely been completed. Correspondingly, the terminal apparatus may enter an LP-WUS mode, to save power.

In Condition 3, in a possible example, S1902 includes: The terminal apparatus monitors the LP-WUS from the network apparatus on the first link when a second timer expires.

A start moment of the second timer is a moment of switching to the third SSSG, and running duration of the second timer is the first duration.

It may be understood that, by defining the second timer, expiry of the second timer indicates the terminal apparatus to enter the LP-WUS working mode.

FIG. 20 is used as an example. The third SSSG is the SSSG 0. When the terminal apparatus switches from another SSSG, for example, the SSSG 1, to the SSSG 0, the second timer is started. During running of the second timer, the terminal apparatus monitors the PDCCH on a PDCCH monitoring occasion of the SSSG 0 till the second timer expires. The SSSG 0 and the SSSG 1 are different SSSGs. Expiry of the second timer means that duration in which the terminal apparatus monitors the PDCCH in the third SSSG reaches the first duration, and a service has most likely been completed. Correspondingly, the terminal apparatus enters the LP-WUS mode, and monitors the LP-WUS on the first link, to save power.

Condition 4: Indication information from the network apparatus is received.

The indication information includes an SSSG index, and the SSSG index indicates to monitor the LP-WUS on the first link.

As a possible alternative description, the SSSG index indicates to enable the first link, or the SSSG index indicates to enable the LP-WUS working mode, or the SSSG index indicates to start monitoring the LP-WUS.

It is easy to understand that in Condition 4, that the terminal apparatus enables the first link means that the terminal apparatus needs to disable the second link. It may be understood that the SSSG index implicitly indicates to disable the second link, or the SSSG index implicitly indicates to stop monitoring the PDCCH.

In Condition 4, the SSSG index is multiplexed, and the SSSG index indicates the terminal apparatus to enable the first link to enter the LP-WUS working mode, to save power.

In Condition 4, in a possible example, the SSSG index includes an index of a fourth SSSG. A PDCCH monitoring periodicity in the fourth SSSG is greater than a PDCCH monitoring periodicity in the third SSSG. In this case, if the description in FIG. 5 or FIG. 6 is still used, the terminal apparatus performs SSSG switching, to switch to the fourth SSSG indicated by the SSSG index. However, in this application, the LP-WUS working mode is used to replace the SSSG having relatively sparse PDCCH monitoring occasions, to save power.

For example, in FIG. 21, the SSSG index is 1, and correspondingly, the fourth SSSG is the SSSG 1. In FIG. 21, PDCCH monitoring occasions in the SSSG 0 are relatively dense, and PDCCH monitoring occasions in the SSSG 1 are relatively sparse.

In this case, if the terminal apparatus is not configured with the LP-WUS mechanism, the terminal apparatus switches from the SSSG 0 to the SSSG 1, as shown in FIG. 5.

However, in this application, if the terminal apparatus is configured with the LP-WUS mechanism, the terminal apparatus replaces the SSSG 1 having relatively sparse PDCCH monitoring occasions with the LP-WUS working mode, that is, the terminal apparatus does not switch to the SSSG 1, but enters the LP-WUS mode, as shown in FIG. 21.

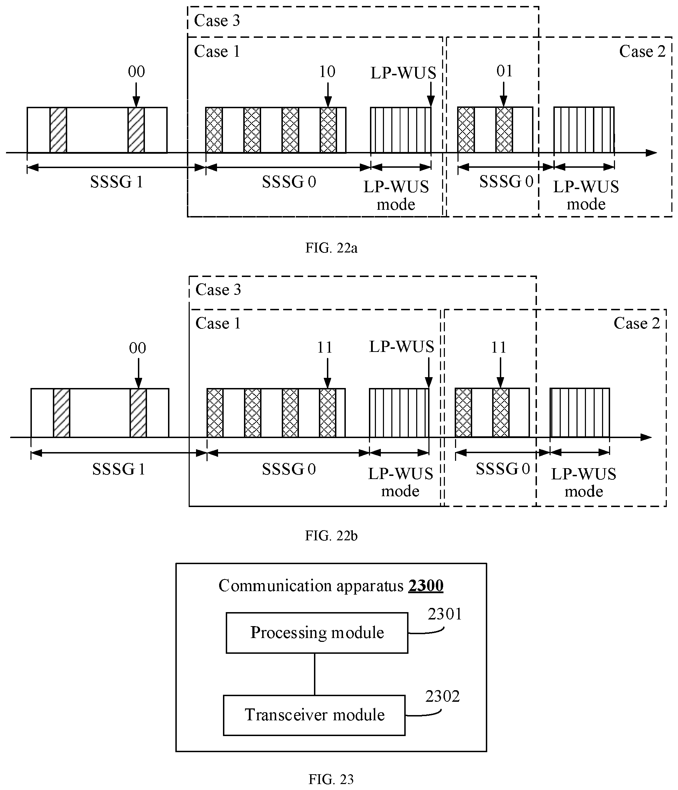

For another example, a dashed-line box in which 'Case 1' in FIG. 22a is located is used as an example. The SSSG index is 10, and correspondingly, the fourth SSSG is the SSSG 2. PDCCH monitoring occasions in the SSSG 0 are relatively dense, and PDCCH monitoring occasions in the SSSG 2 are relatively sparse.

In this case, if the terminal apparatus is not configured with the LP-WUS mechanism, the terminal apparatus switches from the SSSG 0 to the SSSG 2, as shown in FIG. 6.

However, in this application, if the terminal apparatus is configured with the LP-WUS mechanism, the terminal apparatus replaces the SSSG 2 having relatively sparse PDCCH monitoring occasions with the LP-WUS working mode, that is, the terminal apparatus does not switch to the SSSG 2, but enters the LP-WUS mode, as shown by the dashed-line block in which 'Case 1' in FIG. 22a is located.

For another example, a dashed-line box in which 'Case 2' in FIG. 22a is located is used as an example. The SSSG index is 01, and correspondingly, the fourth SSSG is the SSSG 1. PDCCH monitoring occasions in the SSSG 0 are relatively dense, and PDCCH monitoring occasions in the SSSG 1 are relatively sparse.

In this case, if the terminal apparatus is not configured with the LP-WUS mechanism, the terminal apparatus switches to the SSSG 1, as shown in FIG. 6.

However, in this application, if the terminal apparatus is configured with the LP-WUS mechanism, the terminal apparatus replaces the SSSG 1 having relatively sparse PDCCH monitoring occasions with the LP-WUS working mode, that is, the terminal apparatus does not switch to the SSSG 1, but enters the LP-WUS mode, as shown by the dashed-line block in which 'Case 2' in FIG. 22a is located.

As a possible alternative, the indication information does not include the SSSG index, but includes a reserved (reserved) bit. For example, when three groups are configured for the PDCCH monitoring density, the index of the SSSG 0 corresponds to bits '00', the index of the SSSG 1 corresponds to bits '01', the index of the SSSG 2 corresponds to bits '10', and bits '11' are reserved bits. In this case, the indication information includes the reserved bits '11'. The indication information carrying the reserved bits indicates to monitor the LP-WUS on the first link. The terminal apparatus monitors the LP-WUS on the first link based on the indication information, and enters the LP-WUS working mode. Details are not described again.

For example, a dashed-line box in which 'Case 1' or 'Case 2' in FIG. 22b is located is used as an example, and the indication information includes the reserved bits '11'. The terminal apparatus monitors the PDCCH in the SSSG 0. The terminal apparatus receives the indication information carrying the reserved bits '11', and enters the LP-WUS mode based on the indication information carrying the reserved bits '11', as shown by the dashed-line box in which 'Case 1' or 'Case 2' in FIG. 22b is located.

It should be noted that, in related technologies, a purpose of the reserved bits '11' is not described. For example, a processing operation performed by the terminal apparatus based on the reserved bits '11' is not shown, that is, SSSG switching is not involved. It may be understood that, this application provides a manner of using the reserved bits '11', that is, indication information carrying the reserved bits indicates to monitor the LP-WUS on the first link, and the terminal apparatus may enter the LP-WUS mode based on the indication information carrying the reserved bits '11', to save power.

It should be noted that in this application, the second condition includes Condition 3 and/or Condition 4. The terminal apparatus monitors the LP-WUS from the network apparatus on the first link under the second condition. It may be understood that the terminal apparatus monitors the LP-WUS from the network apparatus on the first link under Condition 3, and/or the terminal apparatus monitors the LP-WUS from the network apparatus on the first link under Condition 4.

It should be noted that, in this application, when the terminal apparatus monitors the LP-WUS from the network apparatus on the first link, the second link stops working, for example, the terminal apparatus does not need to monitor the PDCCH from the network apparatus on the second link.

In some embodiments, if the terminal apparatus detects the LP-WUS, the terminal apparatus monitors the PDCCH from the network apparatus in the third SSSG on the second link.

A dashed-line box in which 'Case 3' in FIG. 22a (or'Case 3' in FIG. 22b) is located is used as an example, and the third SSSG is the SSSG 0. When the terminal apparatus is in the LP-WUS mode, if the terminal apparatus detects the LP-WUS, the terminal apparatus switches to the SSSG 0, and monitors the PDCCH in search space of the SSSG 0.

That is, the terminal apparatus monitors the LP-WUS on the first link. If the LP-WUS is detected, it means that the network apparatus most likely has a service for which the terminal apparatus is to be scheduled. Correspondingly, the terminal apparatus monitors the PDCCH again in the third SSSG on the second link, to monitor scheduling information from the network apparatus, so that service transmission can be completed in a timely manner while power consumption is reduced.

In some embodiments, as a possible alternative, if the terminal apparatus detects the LP-WUS, the terminal apparatus does not switch from the LP-WUS mode to the third SSSG, but stops the SSSG, and resumes a normal PDCCH monitoring behavior. It may be understood that, if the terminal apparatus detects the LP-WUS, the terminal apparatus steps out of the SSSG technology, and may keep monitoring the PDCCH, helping successfully detect scheduling information of the network apparatus.

It may be understood that, in the foregoing embodiments, the methods and/or steps implemented by the terminal apparatus may alternatively be implemented by a component (for example, a processor, a chip, a chip system, a circuit, a logical module, or software) that may be used in the terminal apparatus, and the methods and/or steps implemented by the network apparatus may alternatively be implemented by a component (for example, a processor, a chip, a chip system, a circuit, a logical module, or software) that may be used in the network apparatus. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

FIG. 23 is a diagram of a structure of a communication apparatus 2300. The communication apparatus 2300 includes a processing module 2301 and a transceiver module 2302. The communication apparatus 2300 may be configured to implement a function of the foregoing terminal apparatus. Alternatively, the communication apparatus 2300 may be configured to implement a function of the foregoing network apparatus.

In some embodiments, the communication apparatus 2300 may further include a storage module (which is not shown in FIG. 23), configured to store program instructions and data.

In some embodiments, the transceiver module 2302 may also be referred to as a transceiver unit, and is configured to implement a sending function and/or a receiving function. The transceiver module 2302 may include a transceiver circuit, a transceiver machine, a transceiver, or a communication interface.

In some embodiments, the transceiver module 2302 may include a receiving module and a sending module that are respectively configured to perform the transceiving (for example, receiving and/or sending) steps performed by the terminal apparatus or the network apparatus in the foregoing method embodiments, and/or configured to support another process of the technology described in this specification. The processing module 2301 may be configured to perform the processing (for example, determining) steps performed by the terminal apparatus or the network apparatus in the foregoing method embodiments, and/or configured to support another process of the technology described in this specification.

All related content of the steps in the foregoing method embodiments may be cited in function descriptions of the corresponding functional modules. Details are not described herein again.

Optionally, in this application, that a transceiver module receives/sends information may alternatively be understood as that a processing module receives/sends the information via the transceiver module. That the processing module receives/sends the information via the transceiver module may alternatively be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 2300 may be presented with the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 2300 in FIG. 23 is a chip or a chip system, a function/implementation process of the transceiver module 2302 may be implemented by an input/output interface (or a communication interface) of the chip or the chip system, and a function/implementation process of the processing module 2301 may be implemented by a processor (or a processing circuit) of the chip or the chip system.

Because the communication apparatus 2300 provided in this embodiment may perform the foregoing methods, for technical effects that can be obtained, refer to the foregoing method embodiments. Details are not described herein again.

In a possible product form, the terminal apparatus or the network apparatus in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

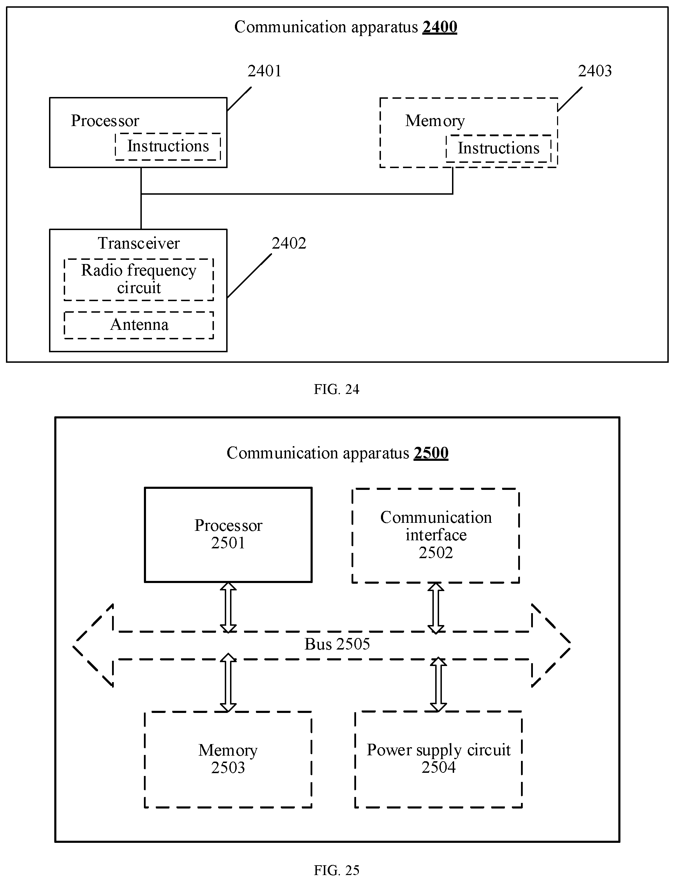

In another possible product form, the terminal apparatus or the network apparatus in embodiments of this application may be implemented by using a general bus architecture. For ease of description, FIG. 24 is a diagram of a structure of a communication apparatus 2400 according to an embodiment of this application. The communication apparatus 2400 includes a processor 2401 and a transceiver 2402. The communication apparatus 2400 may be a terminal apparatus, or a chip or a chip system in the terminal apparatus; or the communication apparatus 2400 may be a network apparatus, or a chip or a module in the network apparatus. FIG. 24 shows only main components of the communication apparatus 2400. In addition to the processor 2401 and the transceiver 2402, the communication apparatus 2400 may further include a memory 2403 and an input/output apparatus (not shown in the figure).

Optionally, the processor 2401 is mainly configured to: process a communication protocol and communication data, control the entire communication apparatus, execute a software program, and process data of the software program. The memory 2403 is mainly configured to store the software program and data. The transceiver 2402 may include a radio frequency circuit and an antenna. The radio frequency circuit is mainly configured to perform conversion between a baseband signal and a radio frequency signal, and process a radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

Optionally, the processor 2401, the transceiver 2402, and the memory 2403 may be connected through a communication bus.

After the communication apparatus is powered on, the processor 2401 may read the software program in the memory 2403, interpret and execute instructions of the software program, and process data of the software program. When data needs to be sent wirelessly, the processor 2401 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 2401. The processor 2401 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 2300 may be in a form of the communication apparatus 2400 shown in FIG. 24.

In an example, a function/implementation process of the processing module 2301 in FIG. 23 may be implemented by the processor 2401 in the communication apparatus 2400 shown in FIG. 24 by invoking computer-executable instructions stored in the memory 2403. A function/implementation process of the transceiver module 2302 in FIG. 23 may be implemented by the transceiver 2402 in the communication apparatus 2400 shown in FIG. 24.

In still another possible product form, the terminal apparatus or the network apparatus in this application may use a composition structure shown in FIG. 25, or include components shown in FIG. 25. FIG. 25 is a diagram of composition of a communication apparatus 2500 according to this application.

As shown in FIG. 25, the communication apparatus 2500 includes at least one processor 2501. Optionally, the communication apparatus further includes a communication interface 2502.

When related program instructions are executed in the at least one processor 2501, the apparatus 2500 may be caused to implement the method provided in any one of the foregoing embodiments and any possible design thereof. Alternatively, the processor 2501 is configured to implement, by using a logic circuit or by executing code instructions, the method provided in any one of the foregoing embodiments and any possible design thereof.

The communication interface 2502 may be configured to receive the program instructions, and transmit the program instructions to the processor. Alternatively, the communication interface 2502 may be configured to perform communication interaction between the communication apparatus 2500 and another communication device, for example, exchange control signaling and/or service data. For example, the communication interface 2502 may be configured to receive a signal from an apparatus other than the communication apparatus 2500, and transmit the signal to the processor 2501; or send a signal from the processor 2501 to a communication apparatus other than the communication apparatus 2500.

Optionally, the communication interface 2502 may be a code and/or data read/write interface circuit, or the communication interface 2502 may be a signal transmission interface circuit between a communication processor and a transceiver, or may be a pin of a chip.

Optionally, the communication apparatus 2500 may further include at least one memory 2503, and the memory 2503 may be configured to store the related program instructions and/or data that are/is required. It should be noted that the memory 2503 may be independent of the processor 2501, or may be integrated with the processor 2501. The memory 2503 may be located inside the communication apparatus 2500, or may be located outside the communication apparatus 2500. This is not limited.

Optionally, the communication apparatus 2500 may further include a power supply circuit 2504, and the power supply circuit 2504 may be configured to supply power to the processor 2501. The power supply circuit 2504 may be located in a same chip as the processor 2501, or may be located in a chip other than a chip in which the processor 2501 is located.

Optionally, the communication apparatus 2500 may further include a bus 2505, and parts of the communication apparatus 2500 may be interconnected through the bus 2505.

In some embodiments, in hardware implementation, a person skilled in the art may figure out that the communication apparatus 2300 shown in FIG. 23 may be in a form of the communication apparatus 2500 shown in FIG. 25.

In an example, a function/implementation process of the processing module 2301 in FIG. 23 may be implemented by the processor 2501 in the communication apparatus 2500 shown in FIG. 25 by invoking computer-executable instructions stored in the memory 2503. A function/implementation process of the transceiver module 2302 in FIG. 23 may be implemented by the communication interface 2502 in the communication apparatus 2500 shown in FIG. 25.

It should be noted that the structure shown in FIG. 25 does not constitute a specific limitation on the terminal apparatus or the network apparatus. For example, in some other embodiments of this application, the terminal apparatus or the network apparatus may include more or fewer components than those shown in the figure, or combine some components, or split some components, or have different component arrangements. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, in this application, the memory may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a random access memory (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in this embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores computer programs or instructions. When the computer programs or instructions are executed by a computer, functions of any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division and may be other division during actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

The units described as separate parts may be physically separated or not, this is, may be located together in a same place or distributed on multiple network units. Parts displayed as units may be or may be not physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example description of this application defined by the appended claims, and are considered to have covered any of or all modifications, variations, combinations or equivalents within the scope of this application. It is clear that a person skilled in the art can make various modifications and variations to this application without departing from the scope of this application. This application is intended to cover these modifications and variations of this application provided that they fall within the scope of the following claims and their equivalent technologies.

## Claims

1. A communication method, wherein the method comprises:
monitoring a low-power wake-up signal LP-WUS from a network apparatus on a first link; and
monitoring a physical downlink control channel PDCCH from the network apparatus on a second link under a first condition, wherein
the first condition comprises at least one of the following:
a first moment arrives, and the first moment is one of periodic moments; or
no LP-WUS is detected on the first link within first duration, wherein
power consumption of the first link is less than power consumption of the second link.

2. The method according to claim 1, wherein the first moment is configured by the network apparatus; or the first duration is configured by the network apparatus.

3. The method according to claim 1 or 2, wherein the method further comprises:
receiving first information from the network apparatus, wherein the first information indicates to start a first timer;
the monitoring the LP-WUS from the network apparatus on the first link comprises:
monitoring the LP-WUS from the network apparatus on the first link during running of the first timer; and
the monitoring the PDCCH from the network apparatus on the second link under the first condition comprises:
when the first timer expires, monitoring the PDCCH from the network apparatus on the second link, wherein running duration of the first timer is the first duration.

4. A communication method, wherein the method comprises:
receiving a first signal from a network apparatus on a first link;
determining, based on signal quality of the first signal, that a radio link failure RLF occurs; and
sending first information to the network apparatus on a second link, wherein the first information indicates that the RLF occurs, and power consumption of the first link is less than power consumption of the second link.

5. The method according to claim 4, wherein after the determining that the RLF occurs, and before the sending the first information to the network apparatus on the second link, the method further comprises:
receiving a second signal from the network apparatus on the second link; and
determining, based on signal quality of the second signal, that the RLF occurs.

6. The method according to claim 5, wherein the method further comprises:
receiving first information from the network apparatus, wherein the first information is used to determine a first threshold; and
determining, based on the signal quality of the first signal, that the RLF occurs comprises:
determining, based on the signal quality of the first signal and the first threshold, that the RLF occurs.

7. The method according to claim 6, wherein
the first information comprises the first threshold; or
the first information comprises a first offset, wherein the first offset is an offset between the first threshold and a second threshold, the second threshold is used by a terminal apparatus to determine, based on the signal quality of the second signal, whether an RLF occurs, and the method is applied to the terminal apparatus.

8. The method according to any one of claims 5 to 7, wherein the method further comprises:
receiving second information from the network apparatus, wherein the second information is used to configure a first measurement gap, the first measurement gap indicates a time period in which the second link is in a disabled state, and the first measurement gap comprises a time period in which the first signal is monitored on the first link.

9. The method according to claim 8, wherein the second information is further used to configure a second measurement gap, the second measurement gap indicates a time period in which the first link is in a disabled state, and the second measurement gap comprises a time period in which the second signal is monitored on the second link.

10. The method according to claim 8 or 9, wherein the second information further indicates a first-type terminal apparatus, a measurement gap configured by using the second information is configured by the network apparatus for the first-type terminal apparatus, and the first-type terminal apparatus comprises a terminal apparatus to which the method is applied.

11. The method according to any one of claims 5 to 10, wherein
the first signal comprises at least one of the following: a low-power channel state information reference signal LP-CSI-RS, a low-power reference signal LP-RS, a channel state information reference signal CSI-RS, a reference signal RS, or a synchronization signal; and/or
the second signal comprises at least one of the following: an LP-CSI-RS, an LP-RS, a CSI-RS, an RS, or a synchronization signal.

12. A communication method, wherein the method comprises:
monitoring a low-power wake-up signal LP-WUS from a network apparatus on a first link in a first time period of a first search space set group SSSG, wherein the first time period is a time period in which a physical downlink control channel PDCCH is not monitored on a second link; and
if the LP-WUS is detected,
monitoring the PDCCH from the network apparatus in a second SSSG on the second link, wherein power consumption of the first link is less than power consumption of the second link.

13. A communication method, wherein the method comprises:
monitoring a physical downlink control channel PDCCH from a network apparatus in a third search space set group SSSG on a second link, wherein the third SSSG is one of at least two preconfigured SSSGs; and
monitoring a low-power wake-up signal LP-WUS from the network apparatus on a first link under a second condition, wherein
the second condition comprises at least one of the following:
duration of PDCCH monitoring in the third SSSG reaches first duration; or
indication information from the network apparatus is received, wherein the indication information comprises an SSSG index, and the SSSG index indicates to monitor the LP-WUS on the first link; and
power consumption of the first link is less than power consumption of the second link.

14. A communication method, wherein the method comprises:
sending a low-power wake-up signal LP-WUS to a terminal apparatus; and
sending a physical downlink control channel PDCCH to the terminal apparatus, wherein moments of sending the PDCCH comprise a first moment, and the first moment is one of periodic moments.

15. The method according to claim 14, wherein the first moment is configured by a network apparatus, and the method is applied to the network apparatus.

16. A communication method, wherein the method comprises:
sending first information to a terminal apparatus, wherein
the first information indicates to start a first timer, and a running status of the first timer indicates whether to monitor a low-power wake-up signal LP-WUS on a first link and indicates whether to monitor a physical downlink control channel PDCCH on a second link.

17. The method according to claim 16, wherein running duration of the first timer is configured by a network apparatus, and the method is applied to the network apparatus.

18. A communication method, wherein the method comprises:
sending second information to a terminal apparatus, wherein
the second information is used to configure a first measurement gap, the first measurement gap indicates a time period in which a second link is in a disabled state, and the first measurement gap comprises a time period in which a first signal is monitored on a first link, and
power consumption of the first link is less than power consumption of the second link.

19. The method according to claim 18, wherein the second information is further used to configure a second measurement gap, the second measurement gap indicates a time period in which the first link is in a disabled state, and the second measurement gap comprises a time period in which a second signal is monitored on the second link.

20. The method according to claim 18 or 19, wherein the second information further indicates a first-type terminal apparatus, a measurement gap indicated by using the second information is configured for the first-type terminal apparatus, and the first-type terminal apparatus comprises the terminal apparatus.

21. A communication method, wherein the method comprises:
sending a low-power wake-up signal LP-WUS to a terminal apparatus in a first time period of a first search space set group SSSG; and
sending a PDCCH to the terminal apparatus in a second SSSG.

22. A communication method, wherein the method comprises:
sending a physical downlink control channel PDCCH to a terminal apparatus in a third search space set group SSSG, wherein the third SSSG is one of at least two preconfigured SSSGs; and
sending a low-power wake-up signal LP-WUS to the terminal apparatus under a second condition, wherein
the second condition comprises at least one of the following:
duration of PDCCH sending in the third SSSG reaches first duration; or
indication information is sent to the terminal apparatus, wherein the indication information comprises an SSSG index, and the SSSG index indicates the terminal apparatus to monitor an LP-WUS.

23. A communication apparatus, wherein the communication apparatus comprises a module configured to perform the method according to any one of claims 1 to 3, or comprises a module configured to perform the method according to any one of claims 4 to 11, or comprises a module configured to perform the method according to claim 12, or comprises a module configured to perform the method according to claim 13, or comprises a module configured to perform the method according to claim 14 or 15, or comprises a module configured to perform the method according to claim 16 or 17; or comprises a module configured to perform the method according to any one of claims 18 to 20; or comprises a module configured to perform the method according to claim 21; or comprises a module configured to perform the method according to claim 22.

24. A communication apparatus, wherein the communication apparatus comprises a processor, and the processor is configured to perform the method according to any one of claims 1 to 3, or the processor is configured to perform the method according to any one of claims 4 to 11, or the processor is configured to perform the method according to claim 12, or the processor is configured to perform the method according to claim 13, or the processor is configured to perform the method according to claim 14 or 15; or the processor is configured to perform the method according to claim 16 or 17; or the processor is configured to perform the method according to any one of claims 18 to 20; or the processor is configured to perform the method according to claim 21; or the processor is configured to perform the method according to claim 22.

25. A computer-readable storage medium, wherein the computer-readable storage medium comprises instructions, and when the instructions are run, the method according to any one of claims 1 to 3 is implemented; or the method according to any one of claims 4 to 11 is implemented; or the method according to claim 12 is implemented; or the method according to claim 13 is implemented; or the method according to claim 14 or 15 is implemented; or the method according to claim 16 or 17 is implemented; or the method according to any one of claims 18 to 20 is implemented; or the method according to claim 21 is implemented; or the method according to claim 22 is implemented.

26. A computer program product, wherein the computer program product comprises instructions, and when the instructions are run, the method according to any one of claims 1 to 3 is implemented; or the method according to any one of claims 4 to 11 is implemented; or the method according to claim 12 is implemented; or the method according to claim 13 is implemented; or the method according to claim 14 or 15 is implemented; or the method according to claim 16 or 17 is implemented; or the method according to any one of claims 18 to 20 is implemented; or the method according to claim 21 is implemented; or the method according to claim 22 is implemented.
